# EUROPEAN PATENT APPLICATION

(11) **EP 4 678 522 A1**
(43) Date of publication of application: **14.01.2026**
(21) Application number: 24188202.6
(22) Date of filing: 12.07.2024
(51) Int. Cl.: B62J 6/045, B62J 6/055, B62J 6/04, B62K 11/10, B62M 7/12

(54) **SCOOTER TYPE VEHICLE**

(71) Applicant: Yamaha Hatsudoki Kabushiki Kaisha, Iwata-shi, Shizuoka 438-8501 (JP)
(72) Inventor: HSIEH, CHIN-YU, HUKOU TOWNSHIP (TW); HUANG, SHIH-MING, HUKOU TOWNSHIP (TW)
(74) Representative: Studio Torta S.p.A.

(57) **Abstract**

The present invention provides a sporty scooter-type vehicle (1) which can restrain a rear portion of the vehicle (1) from increase in size while ensuring a visual recognition of a stop light (SL) at the rear portion of the vehicle (1). The scooter-type vehicle (1) of the present invention includes a rear cover (40) including a left side cover (41L) and a right side cover (41R) respectively disposed on a left side of the vehicle (1) and a right side in a rear view and a taillight unit (TLU) disposed between the left side cover (41L) and the right side cover (41R) in a rear view; wherein The taillight unit (TLU) includes a housing (TLUH) forming an internal space with the translucent cover (TLUC), a taillight including a taillight source (TLG) and a light guide member (LG) having a light guide (LGB) which guides light emitted from the taillight source (TLG), a stop light (SL) including a stop light source (SLG), and a partition member (E). The translucent cover (TLUC) includes an upper light-emitting surface (TLUSU) extending upward and forward from a rear edge of the translucent cover (TLUC) and a lower light-emitting surface (TLUSD) extending downward and forward from the rear edge of the translucent cover (TLUC). At least a portion of the light guide (LGB) overlaps the upper light-emitting surface (TLUSU) in the rear view. The stop light source (SLG) overlaps the lower light-emitting surface (TLUSD) in the rear view. The taillight unit (TLU) is formed so that at least a portion of the light, which is emitted from the stop light source (SLG), is not blocked by the partition member (E) and is emitted to the outside through the light guide member (LG).

## Description

### Technical Field

The present invention relates to a rear portion of a scooter-type vehicle, in particular to a light structure of the rear portion of the scooter-type vehicle.

### Background Information

In general, a taillight, a stop light, and left and right winkers are disposed at a rear portion of a scooter-type vehicle to emit light which is required when the vehicle is traveling. For example, in an example of a patent document 1, the stop light and the taillight are disposed side by side in an up-down direction, and the stop light is disposed on the taillight unit base and is covered by a single translucent cover. As a result, the stop light is built in the taillight unit and is configured as a single taillight unit. On the other hand, left and right winker lights are provided on side covers of the vehicle so that the left and right winker lights are respectively disposed on the left and right sides of the taillight unit.

### Citation List

[Patent Document 1] JP 2014-184800 A1

### SUMMARY OF INVENTION

### Technical Problem

The taillight unit of the conventional scooter-type vehicle, which is disclosed in the patent document 1, is divided into two light units such as the taillight and the stop light in the up-down direction of the vehicle. In addition, the stop light is disposed at an upper portion of the taillight unit of the vehicle and the taillight is disposed at a lower portion of the taillight unit.

In this configuration, the translucent cover, which is shared by the stop light and the taillight, includes a corresponding lens cut for uniformly diffusing light emitted from each of the stop light and the taillight (see FIG. 5 in the patent document 1). In addition, in this conventional scooter-type vehicle, each of the taillight and the stop light includes the same number of six LEDs which is disposed in a vehicle width direction as a light source (see FIG. 2 in the patent document 1). Therefore, the conventional scooter-type vehicle of the patent document 1 has ensured a visual recognition and an identification of the stop light and the taillight. Conventionally, instead of providing the lens cut on the translucent cover, there are vehicles in which each of the stop light and the taillight includes an inner lens in the taillight unit.

However, in the conventional configuration in which the taillight and stop light are disposed side by side in the up-down direction, the rear portion of the vehicle increases in size in the up-down direction. In addition, the translucent cover and the rear portion of the vehicle also increases in size, since the area of the lens cut needs to be increased in order to obtain a larger light diffusion area. On the other hand, even if the inner lens is installed instead of the lens cut, it needs to be larger than the inner lens in order to obtain a larger light diffusion area. Therefore, both of the taillight unit and the rear portion of the vehicle increase in size. As a result, each of the two configurations further increase in size of the rear portion of the vehicle. In other words, there is a problem that the rear part of the conventional scooter-type vehicle increases in size in the up-down direction.

The present invention is made in consideration of the above issues and an object of the present invention is to provide a sporty scooter-type vehicle which can restrain a rear portion of the vehicle from increase in size while ensuring a visual recognition of a stop light at the rear portion of the vehicle.

### Solution to Problems

As a result of examining the configuration of the taillight unit in consideration of the increase in size in the up-down direction of the conventional vehicle, the inventor of the present application has come to the conclusion that since a spatial volume of an arrangement space of the inner lens of the taillight becomes larger, it is necessary to change it. Therefore, the present inventor has considered that the present inventor replaces the inner lens of the conventional taillight of the vehicle with a light guide and moves the light source to both ends of the light guide.

On the other hand, a required area for light diffusion can be reduced compared to the conventional one by changing the lens cut or the inner lens, which corresponds to the conventional taillight, to the light guide, but it is difficult to ensure a visual recognition, since the amount of light emitted by the light source of both ends and the light guide is smaller. Therefore, the present inventor has considered that the above problem cannot be satisfactorily solved by changing the lens cut or the inner lens, which corresponds to the conventional taillight, to the light guide.

In order to solve the technical problem of ensuring the visual recognition, the present inventor has examined as follows. The present inventor has conducted research about swapping the arrangement positions of the taillight and the stop light, and placing the taillight above the stop light in the up-down direction so as to make it easier to recognize the light emitted from the taillight.

In this case, the present inventor has discovered a new problem. Usually, a driver of a following vehicle should look downward and forward at the taillight unit which is disposed at a rear portion of a front motorcycle, and pay particular attention to the stop light to recognize if the front vehicle reduce speed. When performing the above changes, the present inventor has considered of taking measures so that it is easier for the driver of the following vehicle to observe the light emitted from the stop light disposed at a lower portion of the taillight unit of the front motorcycle througha lower portion of a translucent cover at a visual line directed downward and forward.

As mentioned above, it is necessary to solve the further technical problems that arise one after anotherin order to solve the technical problem of increasing the size, which exists at the rear of the conventional scooter-type vehicle.

Therefore, as a result of further diligent examination, the present inventor submits a configuration that can restrain the rear portion of the vehicle from increase in size while ensuring the visual recognition of the stop light at the rear portion of the vehicle.

The scooter-type vehicle of the present invention comprises a seat on which a rider sits, a seat rail supporting the seat and extending toward a rear side, a rear cover including a left side cover and a right side cover disposed lower than the seat and outside the seat rail on a left side and a right side of the vehiclerespectively, and a taillight unit disposed between the left side cover and the right side cover in a rear view. The taillight unit includes a translucent cover, a housing forming an internal space with the translucent cover, a taillight including a taillight source and a light guide member having a light guide which guides light emitted from the taillight source, a stop light including a stop light source, and a partition member. The taillight source, the stop light source, and the partition member are disposed in the internal space. The partition member divides the internal space into arrangement spaces of the taillight and the stop light in an up-down direction. In a plan view, the taillight source is provided adjacent to both ends of the light guide and the stop light source is disposed further forward than at least a portion of the light guide in a front-rear direction. The translucent cover includes an upper light-emitting surface, which is not covered by the rear cover, extending upward and forward from a rear edge of the translucent cover and a lower light-emitting surfac, which is not covered by the rear cover, extending downward and forward from the rear edge of the translucent cover. In the rear view, at least a portion of the light guide overlaps the upper light-emitting surface, and the stop light source overlaps the lower light-emitting surface. The taillight unit is formed so that at least a portion of the light, which is emitted from the stop light source, is not blocked by the partition member and is emitted to the outside through the light guide member.

According to the present invention, in the vehicle of the present application, the lens cut corresponding to the taillight and the inner lens are changed to the light guide, so that the diffusion area of the light can be reduced. Therefore, the taillight unit can be made more compact. As a result, the rear portion of the vehicle can be reduced in size. In addition, in case of being compared with the prior art, the quantity of referred to as the light source can be reduced, for example, from six (in Patent Document 1) to two, so that manufacturing cost of the taillight unit can also be reduced.

In addition, the amount of the emitted light is less by changing to the light guide, but it is sufficiently easy for the driver of the following vehicle to recognize the light, which is emitted from the upper light-emitting surface of the taillight unit by the taillight, by swappingthe arrangement positions of the taillight and the stop light and placing the taillight higher than the stop light in the up-down direction. Therefore, the high visual recognition of the taillight and the stop light can be ensured.

In addition, in the present invention, the taillight unit is disposed so that at least a portion of the light, which is emitted from the stop light source, is not blocked by the partition member and can be emitted to the outside after passing through the light guide member. Thereby, the light, which is emitted from the stop light disposed at the lower portion of the taillight unit, passes through the translucent cover and then reaches the driver's eye of the following vehicle without being blocked by the partition member, when the driver of the following vehicle views the taillight unit of the vehicle forward and downward from behind. Therefore, the light, which is emitted from the stop light disposed at the lower portion of the taillight unit, can be easily recognized even when the driver of the following vehicle is close to the vehicle.

Thus, the light, which is emitted from the stop light disposed at the bottom of the taillight unit, can be easily recognized not only from the lower light-emitting surface of the taillight unit but also from the upper light-emitting surface. Therefore, the high visual recognition of the taillight and the stop light can be ensured.

In addition, the intensity of the light source of the stop light is usually set stronger than the intensity of the light source of the taillight. Even when the taillight and the stop light are lit at the same time, the light of the stop light source, which is transmitted through the upper light-emitting surface, is brighter, so that the driver of the following vehicle, which observes the vehicle from behind with the view line toward the front side and the lower side, can very easily identify the change that the stop light source is lit. Therefore, even if the stop light is disposed at the lower portion of the taillight unit, the visual recognition of the stop light can be ensured. At the same time, the high visual recognition of the taillight and the stop light can be ensured.

As a result, the present invention can ensure the identification of the taillight and the stop light while ensuring the visual recognition of the stop light at the rear portion of the vehicle, and can restrain the rear portion of the vehicle from increase in size.

In one preferred embodiment of the present invention, the stop light further includes a stop light inner lens disposed further backward than the stop light source. The partition member includes an intermediate member which is disposed between the light guide and the stop light inner lens from a left side of the stop light inner lens to a right side of the stop light inner lens in the rear view.

According to one preferred embodiment of the present invention, when viewed from the rear side of the vehicle, the intermediate member of the partition member functions as a substantial partition wall between the taillight and the stop light. Therefore, when the taillight and the stop light are lit at the same time, the intermediate member becomes a clear boundary between the taillight and the stop light. As a result, the light, which is emitted by each of the taillight and the stop light SL, can be more easily distinguished and the identification of the taillight and the stop light can be ensured.

In one preferred embodiment of the present invention, at least a portion of a front edge of the intermediate member of the partition member is formed so as to be positioned further backward than the stop light inner lens in the front-rear direction.

According to one preferred embodiment of the present invention, the light, which is emitted from the light source of the stop light, can be transmitted through the stop light inner lens, the light guide member, and the upper light-emitting surface of the translucent cover in order toward the rear side and the upper side in a wider angle range, by limiting the position of the front edge of the intermediate member of the partition member. As a result, the identification of the taillight and the stop light can be ensured when the taillight and the stop light are lit at the same time and the light, which is emitted from the stop light disposed at the lower portion of the taillight unit, can be more reliably recognized when the driver of the following vehicle is approaching.

In one preferred embodiment of the present invention, the partition member further includes an upper member which is provided in an upper side of the intermediate member in a up-down direction. At least a portion of a rear edge of the upper member is disposed further backward than the front edge of the intermediate member and further forward than the light guide in the front-rear direction.

According to one preferred embodiment of the present invention, the strength of the partition member can be ensured, since the upper opening between the upper member and the intermediate member is not too large by limiting the position of at least a portion of the rear edge of the upper member of the partition member. The light, which is emitted from the stop light source, can pass through the front side of the front edge of the intermediate member and the rear side of the rear edge of the upper member diagonally, rearwardly and upwardly from the front. As a result, the identification of the taillight and the stop light can be ensured and the light, which is emitted from the stop light disposed at the lower portion of the taillight unit, can be more reliably recognized when the driver of the following vehicle is approaching.

In one preferred embodiment of the present invention, the light guide member is disposed so that at least a portion of the light, which is emitted from the stop light source, is emitted to the outside through the light guide.

According to one preferred embodiment of the present invention, the light, which is emitted from the stop light source and passes through the upper light-emitting surface of the translucent cover, passes through the light guide before passing through the upper light-emitting surface. The light guide has the function of guiding and concentrating the transmitting light. Therefore, since the light, which is emitted from the stop light source and passes through the upper light-emitting surface of the taillight unit, is concentrated by the light guide LGB before passing through the upper light-emitting surface, the identification of the taillight and the stop light can be ensured when the taillight and the stop light are lit at the same time.

In one preferred embodiment of the present invention, the stop light source is disposed between taillight sources provided adjacent to both ends of the light guide in a left-right direction.

According to one preferred embodiment of the present invention, the taillight and the stop light can be and disposed in a more compact manner in the up-down direction, since the taillight source, which are provided at both ends of the light guide, are disposed outside the stop light source. As a result, the rear portion of the scooter-type vehicle is further reduced in size.

In one preferred embodiment of the present invention, the stop light has a plurality of the stop light sources and the plurality of the stop light sources are disposed side by side in the left-right direction.

According to one preferred embodiment of the present invention, it is easy for the driver of the following vehicle to recognize the light when the stop light is lit and the identification of the stop light can be ensured, since the plurality of stop light sources are disposed side by side in the left-right direction.

In one preferred embodiment of the present invention, the upper light-emitting surface of the taillight unit is formed in a substantially U-shape in the plan view.

According to one preferred embodiment of the present invention, since the upper light-emitting surface of the taillight unit is U-shaped in the plan view, the width in the left-right direction of the taillight unit is restrained while lengthening both sides. Thereby, it is possible to ensure the area of the light-emitting surface while miniaturizing the taillight unit. As a result, the rear portion of the scooter-type vehicle can be made even smaller while ensuring the visual recognition of the taillight unit.

In one preferred embodiment of the present invention, a width of the upper light-emitting surface of the taillight unit in the left-right direction is reduced toward the rear side in the plan view.

According to one preferred embodiment of the present invention, the width of the vehicle in the left-right direction can become smaller toward the rear, since the width of the upper light-emitting surface of the taillight unit in the left-right direction is reduced toward the rear side in the plan view. As a result, the rear portion of the scooter-type vehicle can be made even smaller while ensuring the visual recognition of the taillight.

In one preferred embodiment of the present invention, the scooter-type vehicle further comprises a light guide lens portion extending forward from the upper portion of the light guide.

According to one preferred embodiment of the present invention, the visual recognition of the taillight from the diagonally rear side of the vehicle can be ensured, since the light of the light guide can be further emitted toward the upper light-emitting surface.

### BRIEF DESCRIPTION OF THE DRAWINGS

FIG. 1 is a left side view of a scooter-type vehicle 1.
FIG. 2 is a right side view of the scooter-type vehicle 1.
FIG. 3 is a plan view of the scooter-type vehicle 1 in a state where a grip is removed.
FIG. 4 is a partially enlarged rear view of the scooter-type vehicle 1.
FIG. 5 is a partially enlarged plan view of the scooter-type vehicle 1 in the state where the grip is removed.
FIG. 6 is an exploded perspective view of a taillight unit TLU.
FIG. 7 is an exploded perspective view of a left winker WL and a right winker WR.
FIG. 8 is a partially enlarged left side view of the scooter-type vehicle 1.
FIG. 9 is a partially enlarged right side view of the scooter-type vehicle 1.
FIG. 10 is a partially enlarged perspective rear view of the scooter-type vehicle 1.
FIG. 11 is a rear view of the taillight unit TLU in a state where a translucent cover TLUC, a light guide member LG, a stop light inner lens INL, and a partition member E removed.
FIG. 12 is the rear view of the taillight unit TLU in a state where the translucent cover TLUC and the partition member E removed.
FIG. 13 is the rear view of the taillight unit TLU in a state where the translucent cover TLUC removed.
FIG. 14 is a rear view of the partition member E.
FIG. 15A is a schematic diagram of FIG. 13 on A-A cross-section.
FIG. 15B is a schematic diagram of a part of the taillight unit TLU when viewing the vehicle forward and downward from behind at 35 degrees with respect to the horizontal direction.
FIG. 15C is the schematic diagram of the part of the taillight unit TLU when viewing the vehicle forwoard and downward from behind at 25 degrees with respect to the horizontal direction.

### DETAILED DESCRIPTION OF EMBODIMENTS

A scooter-type vehicle according to the present invention will be described in detail with reference to an embodiment shown in the accompanying drawings.

Unless otherwise specified, front, rear, left, and right respectively means a front direction, a rear direction, a left direction, and a right direction as seen from a rider sitting on the scooter-type vehicle 1 in the following description. Forward, rearward, leftward, and rightward respectively means toward the front, toward the rear, toward the left, and toward the right as seen from a rider sitting on the scooter-type vehicle 1. In a state where the vehicle is stationary and upstanding, a front-rear direction is the same as a length direction of the vehicle, a left-right direction is the same as a width direction of the vehicle, and a up-down direction is the same as a height direction of the vehicle. Unless otherwise specified, the front-rear direction corresponds to a front-rear direction of the vehicle, the left-right direction corresponds to a left-right direction of the vehicle, and the up-down direction corresponds to a up-down direction of the vehicle. "Front view" is a drawing in a state where the scooter-type vehicle 1 is viewed from a front side thereof. "Side view" is a drawing in a state where the scooter-type vehicle 1 is viewed from sides thereof, i.e., from a left side or a right side, "plan view" corresponds is a drawing in a state where the scooter-type vehicle 1 is viewed from an upper side thereof, and "rear view" corresponds to a drawing in a state where the scooter-type vehicle 1 is viewed from a rear side thereof. In addition, directions of arrows F and B in the drawings respectively indicate the front direction and the rear direction, directions of arrows U and D respectively indicate the upper side and a lower side, and directions of arrows L and R respectively indicate the left side and the right side.

In addition, unless otherwise specified, a horizontal direction is a direction horizontal to the ground, and a vertical direction is a direction vertical to the ground in the following description.

### <Entire vehicle>

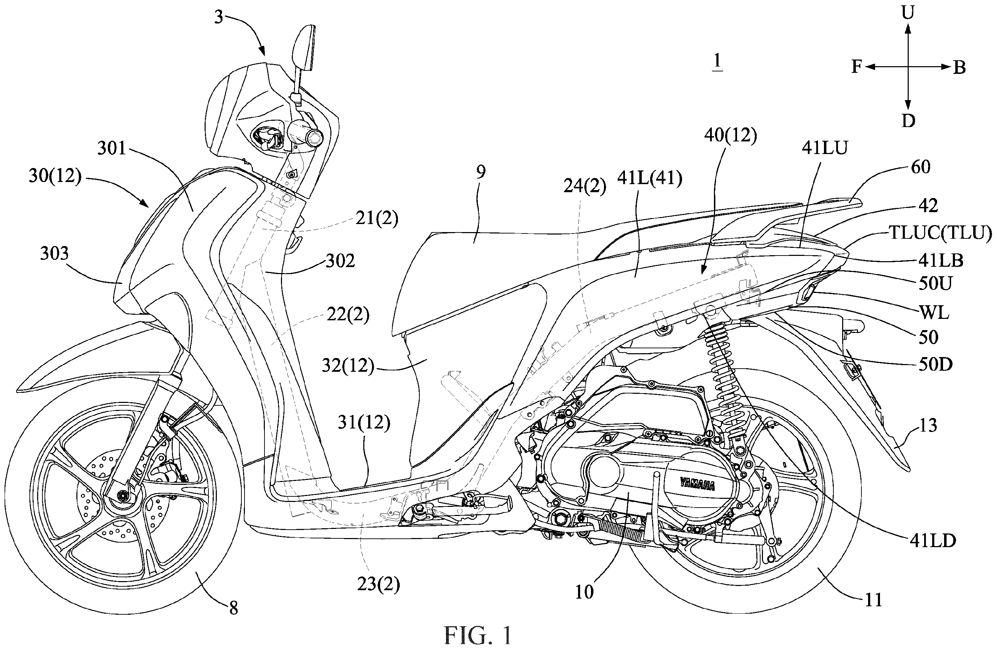

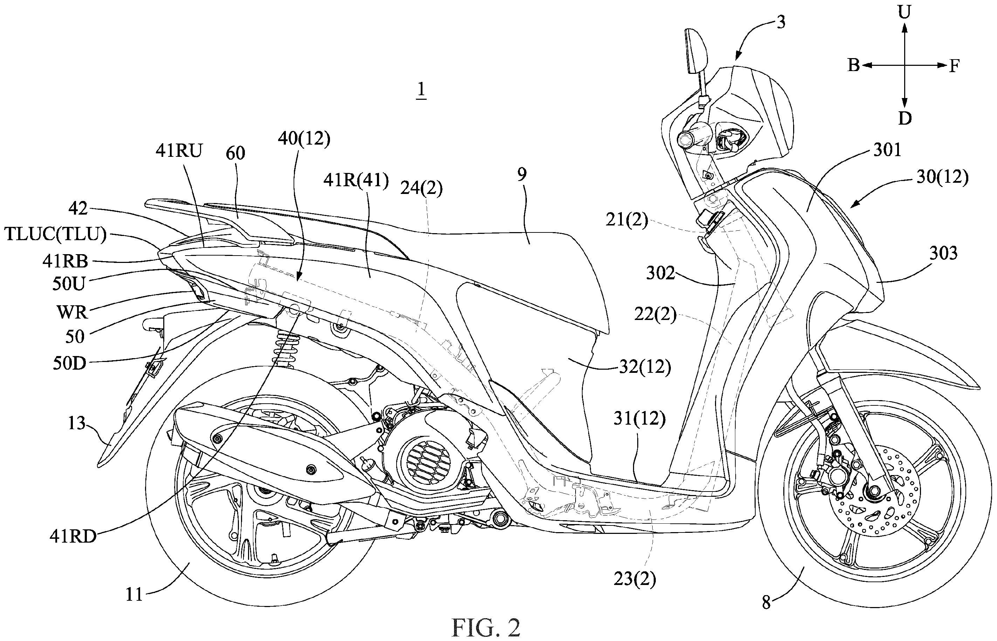

FIG. 1 is a left side view of the scooter-type vehicle 1 of the present embodiment. FIG. 2 is a right side view of the scooter-type vehicle 1 of the present embodiment.

The scooter-type vehicle 1 of this embodiment is a so-called "underborn" scooter-type vehicle. As shown in FIG. 1, a front wheel 8 of the scooter-type vehicle 1 is steered by a steering mechanism 3. The scooter-type vehicle 1 includes a body frame 2. The body frame 2 includes a head pipe 21 into which a steering shaft of a steering mechanism 3 is inserted to rotatably support the steering mechanism 3, a down frame 22 extending downward from the head pipe 21, a lower frame 23 extending rearward from the down frame 22, and a seat rail 24 extending rearward and upward from the lower frame 23. A unit swing-type power unit 10 is supported in a center of the body frame 2 so as to be able to swing up and down about a pivot portion. The power unit 10 is not limited to the unit swing-type and may be fixed to the body frame 2, for example. A seat 9 is attached above the power unit 10 so as to be openable and closable with respect to a storage box (not shown) around a hinge pin (not shown) which is provided at a front end or a rear end of the seat 9. The seat rails 24 support the seat 9 and are provided to extend toward the rear side of the vehicle. A rear end of the power unit 10 is connected to rear wheels 11 and transmits an output of an engine to the rear wheels 11. In addition, a body cover 12 of the scooter-type vehicle 1 is disposed outside the body frame 2 and a storage box (not shown), and forms a portion of an external appearance of the vehicle. Furthermore, the license bracket 13 is provided below the body cover 12. In addition, a grip 60 is provided at a rear portion of the vehicle behind the seat 9 and above a taillight unit TLU.

The rider operates the steering mechanism 3 to drive the scooter-type vehicle 1 in a state where the rider sits on a seating portion in front of the seat 9 and places his/her feet on an upper surface of a footrest portion 31. The scooter-type vehicle 1 of this embodiment is an example of a two-seater vehicle, and a tandem rider can ride in a seating position on a tandem portion of the seat 9.

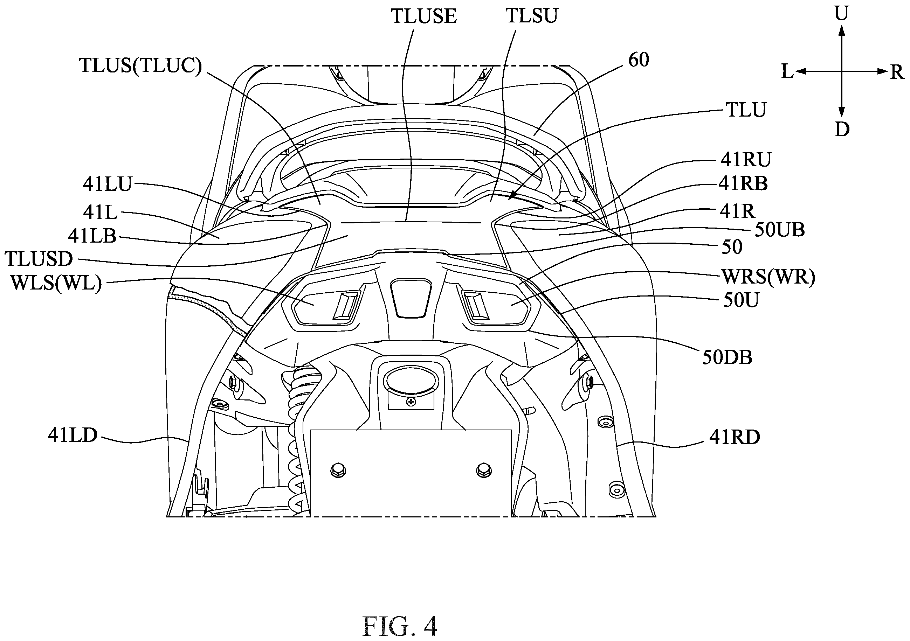

As shown in FIG. 4, the taillight unit TLU which shows the existence of the vehicle and a left winker WL and a right winker WR which show a direction in which the vehicle is turning are disposed at the rear portion of the scooter-type vehicle 1.

### < body cover>

The body cover 12 include a front cover 30, the footrest portion 31, a center cover 32, a rear cover 40, etc. As shown in FIG. 1, a front cover 30 is provided at a front portion of the vehicle. The footrest 31, on which the rider places his/her feet, is provided between the front cover 30 and the rear cover 40. The center cover 32 is disposed between a rear end of the footrest portion 31 and a front portion of the seat 9.

The front cover 30 includes side covers 301 disposed on the sides of a front portion of the vehicle, a rear side cover 302 disposed behind the front portion of the vehicle, and a front side cover 303 disposed in front of the head pipe 21.

In this embodiment, the footrest portion 31 disposed between the front cover 30 and the rear cover 40 is a structure including a flat upper surface, but the rear cover 40 is not limited to this structure and may be a structure including, for example, a tunnel portion in a center of the footrest portion 31.

### <Rear cover>

The rear cover 40 is disposed lower than the seat 9 and outside the seat rails 24 in the rear view and the rear cover 40 defines a space below the seat 9. In this embodiment, as shown in FIGS. 1 and 2, the rear cover 40 mainly includes side covers 41, a winker cover 50, and an upper cover 42 which covers at least a portion of the taillight unit TLU from the upper side and is positioned between the seat 9 and the taillight unit TLU. In the present invention, the seat 9 may be adjacent to the taillight unit TLU and the upper cover 42 may not exist between the seat 9 and the taillight unit TLU.

### <Side cover>

The side covers 41 are disposed lower than the seat 9 and are disposed at least below the seat 9 on the left and right sides of the vehicle. The side covers 41 cover at least a portion of the seat rail 24, the body frame 2, and the storage box below the seat 9, and forms a portion of the external appearance of the vehicle. More specifically, as shown in FIGS. 1 and 2, the side covers 41 include a left side cover 41L and a right side cover 41R which are respectively disposed on the left and right sides of the vehicle. The left side cover 41L and the right side cover 41R are preferably formed symmetrically, but may be modified so as not to be symmetrical in order to achieve a new external design for the vehicle or to dispose parts.

Furthermore, in the present invention, even if the left side cover 41L, the right side cover 41R and the upper cover 42 are formed integrally, a portion covering at least a portion of the taillight unit TLU from the upper side and disposed between the seat 9 and the taillight unit TLU is regarded as the upper cover 42, a portion disposed on the left side of the vehicle is regarded as the left side cover 41L, and a portion disposed on the right side of the vehicle is regarded as the right side cover 41R.

In the following description of the invention, when the side covers 41 are mentioned, they refer to both of the left side cover 41L and the right side cover 41R. In the description of the present invention, when upper edges of the side covers 41 are mentioned, they refer to both of an upper edge 41LU of the left side cover 41L and an upper edge 41RU of the right side cover 41R. In the description of the present invention, when lower edges of the side covers 41 are mentioned, they refers to both of a lower edge 41LD of the left side cover 41L and a lower edge 41RD of the right side cover 41R. In addition, in the description of the present invention, when rear ends of the side covers 41 are mentioned, they refers to both of a rear end 41LB of the left side cover 41L and a rear end 41RB of the right side cover 41R.

Further, the left side cover 41L and the right side cover 41R of the side covers 41 are disposed lower than the seat 9 and are disposed outside the seat rails 24 on the left and right sides of the vehicle, respectively. The upper edges 41LU, 41RU of the side covers 41 extend at least partially rearward, and the lower edges 41LD, 41RD of the side covers 41 extends at least partially rearward and upward in the side view. Specifically, as shown in FIG. 1, at least a portion of the upper edge 41LU of the left side cover 41L extends rearward, and at least a portion of the lower edge 41LD extends rearward and upward so as to approach the upper edge 41LU in the left side view. Similarly, as shown in FIG. 2, at least a portion of the upper edge 41RU of the right side cover 41R extends rearward, and at least a portion of the lower edge 41RD extends rearward and upward so as to approach the upper edge 41RU in the right side view. Therefore, the side covers 41 include a shape which gradually becomes thinner toward the rear portion of the vehicle and becomes lighter and smaller toward the rear portion of the vehicle in the side view. As a result, the scooter-type vehicle 1 can be reduced in weight and size and a sportier vehicle is achieved.

Furthermore, "at least a portion of the upper edges of the side covers 41 extends rearward" includes any of "at least a portion of the upper edges of the side covers 41 extends rearward and upward", "at least a portion of the upper edges of the side covers 41 extends rearward and downward, or "at least a portion of the upper edges of the side covers 41 extends horizontally toward the rear". In this embodiment, at least a portion of the upper edges 41LU, 41RU of the side covers 41 is formed so as to extend rearward and upward.

In addition, the rear ends 41LB, 41RB of the side covers 41, where the upper edges 41LU, 41RU and the lower edges 41LD, 41RD of the side covers 41 intersect, overlap with the taillight unit TLU in the side view. Specifically, the rear end 41LB of the left side cover 41L, where the upper edge 41LU and the lower edge 41LD of the left side cover 41L intersect, overlaps with the taillight unit TLU in the left side view. In other words, the rear end 41LB of the left side cover 41L, where the upper edge 41LU and the lower edge 41LD of the left side cover 41L intersect, is adjacent the taillight unit TLU on the left side of the taillight unit TLU. Similarly, the rear end 41RB of the right side cover 41R, where the upper edge 41RU and the lower edge 41RD of the right side cover 41R intersect, overlaps with the taillight unit TLU in the right side view. In other words, the rear end 41RB of the right side cover 41R, where the upper edge 41RU and the lower edge 41RD of the right side cover 41R intersect, is adjacent the taillight unit TLU on the right side of the taillight unit TLU. Therefore, since it is possible to confirm a light emission state of the taillight unit TLU even from the side, it is possible to ensure a visual recognition of the taillight unit TLU from the side while making the taillight unit TLU compact.

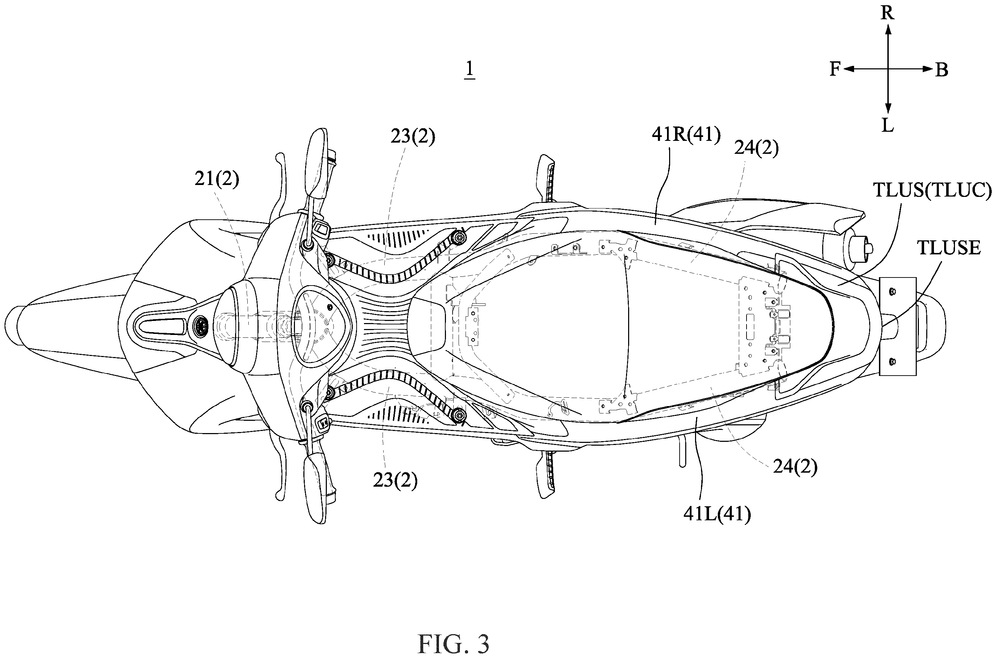

As shown in FIG. 4, at least a portion of the left side cover 41L and the right side cover 41R extends so as to approach a center of the vehicle in the left-right direction toward the rear in the rear view. In other words, at least a portion of the upper edge 41LU of the left side cover 41L extends so as to approach the center of the vehicle in the left-right direction toward the rear and at least a portion of the lower edge 41LD extends so as to approach the center of the vehicle in the left-right direction toward the rear. Similarly, at least a portion of the upper edge 41RU of the right side cover 41R extends so as to approach the center of the vehicle in the left-right direction toward the rear and at least a portion of the lower edge 41RD extends so as to approach the center of the vehicle in the left-right direction toward the rear. As shown in FIG. 3, in the plan view in a state where the grip 60 is removed, the sporty scooter-type vehicle 1, which prevents the rear portion of the vehicle from increasing in size, is provided, since a width of the rear portion of the scooter-type vehicle 1 in the left-right direction is reduced by forming the side cover 41 in this manner. In addition, the tandem rider can ride in a relaxed position since the tandem rider does not need to spread his legs wide. In addition, in this embodiment, the rear end 41LB of the upper edge 41LU and the lower edge 41LD of the left side cover 41L is closest to the center of the vehicle in the left-right direction and the rear end 41RB of the upper edge 41RU and the lower edge 41RD of the right side cover 41R is closest to the center of the vehicle in the left-right direction.

In this embodiment, as shown in the side views of FIGS. 1 and 2 and the rear view of FIG. 4, a surface of each of the left side cover 41L and the right side cover 41R is formed so that a concave portion, which is recessed between the upper edges 41LU, 41RU and the lower edges 41LD, 41RD, exists. As will be described later, in the present invention, the winker cover 50 is disposed under the taillight unit TLU in the rear view. In other words, an entire portion of the left winker WL and the right winker WR is disposed under the taillight unit TLU in the rear view. Therefore, the concave portion, which is recessed between the upper edges 41LU, 41RU and the lower edges 41LD, 41RD, can be formed on the surface of each of the left side cover 41L and the right side cover 41R. As shown in FIG. 3, this configuration makes it possible to reduce the left-right width of the side covers 41 without swelling the surfaces of the side covers 41 and thus the sporty scooter-type vehicle 1, which prevents the left-right width of the rear portion of the vehicle from increasing in size, can be provided. In addition, the tandem rider can ride in the relaxed position since the tandem rider does not need to spread his legs wide.

### <Winker cover>

As shown in the side views of FIGS. 1 and 2 and in the rear view of FIG. 4, the winker cover 50 is disposed lower than the side covers 41 at the rear portion of the side covers 41. The winker cover 50 is a member which covers the left winker WL and the right winker WR. More specifically, in the rear view of FIG. 4, the winker cover 50 covers a periphery of the left winker WL and the right winker WR so as to expose only a left winker light-emitting surface WLS and a right winker light-emitting surface WRS which will be described later.

More preferably, as shown in the side view of FIGS 1 and 2, an upper edge 50U of the winker cover 50 extends along the lower edge of the side covers 41 in the side view. A lower edge 50D of the winker cover 50 extends rearward and upward from the front side. Specifically, as shown in FIG. 1, the upper edge 50U, which is disposed on the left side of the winker cover 50, extends along the lower edge 41LD of the left side cover 41L, and the lower edge 50D, which is disposed on the left side of the winker cover 50, extends rearward and upward from the front side in the left side view. Similarly, as shown in FIG. 2, the upper edge 50U, which is disposed on the right side of the winker cover 50, extends along the lower edge 41RD of the right side cover 41R, and the lower edge 50D, which is disposed on the right side of the winker cover 50, extends rearward and upward from the front side in the right side view. Therefore, the winker cover 50 can be provided adjacent to the side covers 41 and the thickness of the rear portion of the vehicle in the up-down direction can be reduced, and the rear portion of the vehicle can be formed so as to gradually become thinner toward the rear in accordance with a shape of the side covers 41. As a result, the vehicle can be reduced in weight and size and the scooter-type vehicle 1 becomes a sportier vehicle.

In this embodiment, the winker cover 50 is disposed so that a gap does not exist between the upper edge 50U of the winker cover 50 and the lower edges 41LD, 41RD of the side covers 41 in the side view. However, as long as the upper edge 50U of the winker cover 50 extends along the lower edge 41LD, 41RD of the side covers 41, there may be a gap between the upper edge 50U of the winker cover 50 and the lower edge 41LD, 41RD of the side covers 41.

In addition, in this embodiment, the winker cover 50 is formed so that the periphery of the left winker WL and the right winker WR is covered by the single winker cover 50, but the winker cover 50 is not limited to this configuration and two or more separate winker covers 50, which respectively cover a part of the periphery of the left winker WL and the right winker WR, can be used.

In addition, as shown in FIG. 4, at least a portion of the winker cover 50 can extend so as to approach the center of the vehicle in the left-right direction toward the rear in the rear view. In other words, at least a portion of the upper edge 50U of each of the left and right sides of the winker cover 50 extends so as to approach the center of the vehicle in the left-right direction toward the rear, and at least a portion of the lower edge 50D of each of the left and right sides extends so as to approach the center of the vehicle in the left-right direction toward the rear. The sporty scooter-type vehicle 1, which reduces the width in the left-right direction of the rear portion of the scooter-type vehicle 1 and prevents the rear portion of the vehicle from increasing in size, is provided as well as the side covers 41 by forming the winker cover 50 in this manner. In addition, in this embodiment, a rear end 50UB of the upper edge 50U of each of the left and right sides of the winker cover 50 is closest to the center of the vehicle in the left-right direction, and a rear end 50DB of the lower edge 50D of each of the left and right sides is closest to the center of the vehicle in the left-right direction.

In addition, as shown in FIG. 4, more preferably, the winker cover 50 is disposed between the left side cover 41L and the right side cover 41R in the rear view. The rear portion of the scooter-type vehicle 1 is further reduced in size and the scooter-type vehicle 1 becomes a sportier vehicle, since the width in the left-right direction of the winker cover 50, which covers the periphery of the left winker WL and the right winker WR, can be made smaller by this configuration.

### <Winker>

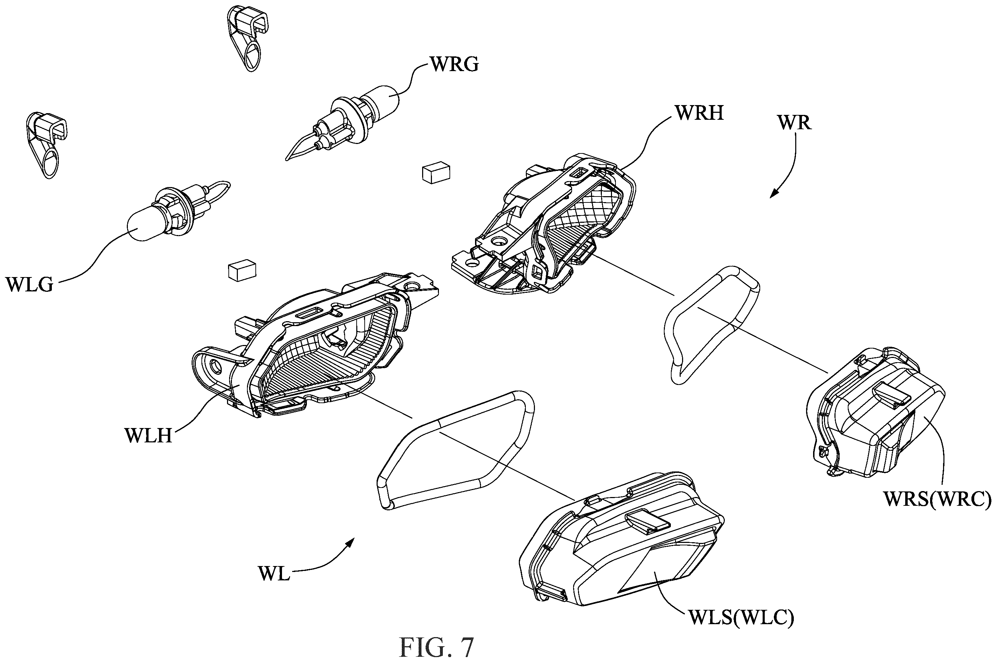

As shown in FIG. 4, the scooter-type vehicle 1 includes the left winker WL disposed on the left side with respect to the center of the vehicle in the left-right direction at the rear portion of the vehicle in the rear view, and the right winker WR disposed on the right side with respect to the center of the vehicle in the left-right direction at the rear portion of the vehicle in the rear view. As shown in FIG. 7, the left winker WL includes a light source WLG of the left winker WL, a housing WLH to which the light source WLG is mounted, and a left winker translucent cover WLC which transmits light from the light source WLG. The light source WLG is disposed in an internal space which is formed by the left winker translucent cover WLC and the housing WLH. Similarly, the right winker WR includes a light source WRG of the right winker WR, a housing WRH to which the light source WRG is mounted, and a right winker translucent cover WRC which transmits light from the light source WRG. The light source WRG is disposed in an internal space which is formed by the right winker translucent cover WRC and the housing WRH. The left winker translucent cover WLC and the right winker translucent cover WRC are formed of a light-transmitted material and allows the light from the light sources WLG and WRG to transmit. For example, the left winker translucent cover WLC and the right winker translucent cover WRC are formed by a transparent or colored transparent resin.

In this embodiment, an entire portion of the left winker WL and the right winker WR is disposed underthe taillight unit TLU in the rear view. In addition, an entire portion of the left winker WL and the right winker WR is disposed underthe taillight unit TLU in the side view.

As described above, the periphery of the left winker WL and the right winker WR is covered by the winker cover 50, but an entire portion or a part of the left winker translucent cover WLC of the left winker WL and the right winker translucent cover WRC of the right winker WR is exposed. In the present invention, an exposed portion of the left winker translucent cover WLC, which is not covered by the winker cover 50, is referred to as the left winker light-emitting surface WLS, and an exposed portion of the right winker translucent cover WRC, which is not covered by the winker cover 50, is referred to as the right winker light-emitting surface WRS. In other words, the winker cover 50 covers the periphery of the left winker WL and the right winker WR so as to expose only the left winker light-emitting surface WLS and the right winker light-emitting surface WRS in the rear view.

Therefore, the left winker WL includes the left winker light-emitting surface WLS, and the right winker WR includes the right winker light-emitting surface WRS. Since the light from the light source WLG of the left winker WL is transmitted through the left winker light-emitting surface WLS and is emitted to the outside, the light from the light source WLG can be confirmed from the outside. In addition, since the light from the light source WRG of the right winker WR is transmitted through the right winker light-emitting surface WRS and is emitted to the outside, the light from the light source WRG can be confirmed from the outside.

To explain in more detail, in the present invention, a portion of the left winker translucent cover WLC, which is covered by the winker cover 50 and does not belong to the left winker light-emitting surface WLS, corresponds to a portion of the left winker translucent cover WLC where the light, which is emitted from the light source WLG of the left winker WL, cannot be confirmed from any point viewed from the outside. Similarly, a portion of the right winker translucent cover WRC, which is covered by the winker cover 50 and does not belong to the right winker light-emitting surface WRS, corresponds to a portion of the right winker translucent cover WRC where the light, which is emitted from the light source WRG of the right winker WR, cannot be confirmed from any point viewed from the outside. Therefore, for example, the portion of the left winker translucent cover WLC, where the light emitted from the light source WLG of the left winker WL cannot be confirm when viewed from the sides but can be confirmed when viewed from behind, belongs to the left winker light-emitting surface WLS and does not correspond to the portion which is covered by the left winker translucent cover WLC.

Thus, unlike conventional scooter-type vehicles in which left and right winkers are disposed on the side covers of the vehicle, in the present invention, no space is used in the side covers 41L, 41R for disposing the left winker WL and the right winker WR since the left winker WL and right winker WR are disposed underthe taillight unit TLU. As a result, this configuration makes it possible to further reduce the left-right width of the side covers 41L, 41R and makes them more compact. Therefore, the vehicle is made smaller and the scooter-type vehicle 1 becomes a sportier vehicle. In addition, since the winker cover 50 exists as a substantial partition between the left and right winkers WL, WR and the taillight unit TLU, a halo is less likely to create around the left winker WL and the right winker WR when they are emitting light. Therefore, even if miniaturization is pursued by disposing the left winker WL and the right winker WR so as to be close to the taillight unit TLU, the light from the taillight unit TLU can be more clearly distinguished from the light from the left winker WL and the right winker WR and the identification of both lights is ensured since interference with the light of the turned-on taillight unit TLU is greatly reduced.

More preferably, as shown in the rear view of FIG. 4, an entire portion of the left and right winker light-emitting surfaces WLS, WRS is disposed between the left end TLUSL and the right end TLUSR of the light-emitting surface TLUS of the taillight unit TLU. In other words, the left end TLUSL of the light-emitting surface TLUS of the taillight unit TLU is disposed further leftward than a left end WLSL of the left winker light-emitting surface WLS in the rear view, and the right end TLUSR of the light-emitting surface TLUS of the taillight unit TLU is disposed further rightward thana right end WLSR of the right winker light-emitting surface WRS in the rear view. Therefore, the rear portion of the scooter-type vehicle 1 is further reduced in size and the scooter-type vehicle 1 becomes a sportiervehicle, since the left-right width of the winker cover 50, which covers the periphery of the left winker WL and the right winker WR, can be further reduced and becomes thinner from the upper side of the vehicle to the lower side of the vehicle in the rear view. In the embodiment of the present invention, the left and right ends of the upper light-emitting surface TLUSU correspond to the left end TLUSL and right end TLUSR of the light-emitting surface TLS of the taillight unit TLU, and the left-right width of the upper light-emitting surface TLUSU becomes wider. But the present invention is not limited to this configuration. It is possible to modify the embodiment so that the left and right ends of the lower light-emitting surface TLUSD correspond to the left end TLUSL and right end TLUSR of the light-emitting surface TLUS of the taillight unit TLU and the left-right width of the lower light-emitting surface TLUSD becomes wider.

More preferably, as shown in Figs. 1 and 2, the left winker light-emitting surface WLS and the right winker light-emitting surface WRS are disposed so as to be exposed from the winker cover 50 in the side view. In other words, the left winker light-emitting surface WLS and the right winker light-emitting surface WRS are formed so as to have a portion which is exposed from the winker cover 50 in the side view. As a result, even if the winker cover 50 covers the periphery of the left winker WL and the right winker WR, the visual recognition of the left winker WL and the right winker WR from the sides can be ensured since it is possible to confirm the left winker WL or the right winker WR from the sides when the left winker WL or the right winker WR blinks.

On the other hand, it is also conceivable to dispose the left winker light-emitting surface WLS and the right winker light-emitting surface WRS so that the left winker light-emitting surface WLS and the right winker light-emitting surface WRS are not exposed from the winker cover 50 in the side view.

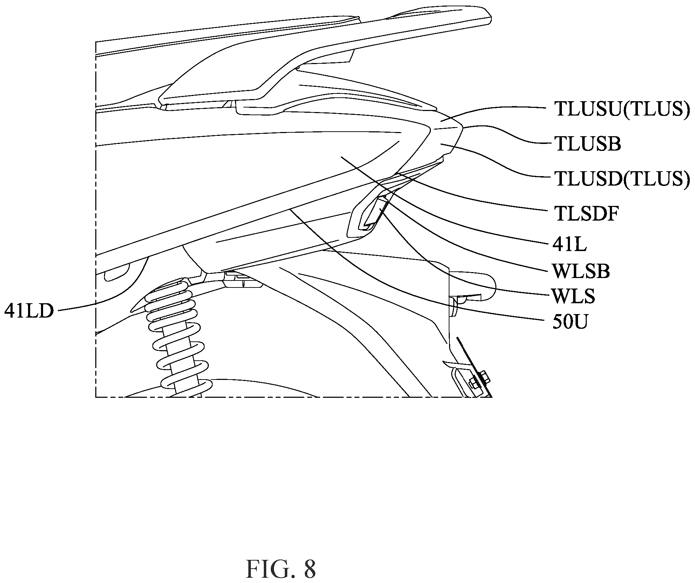

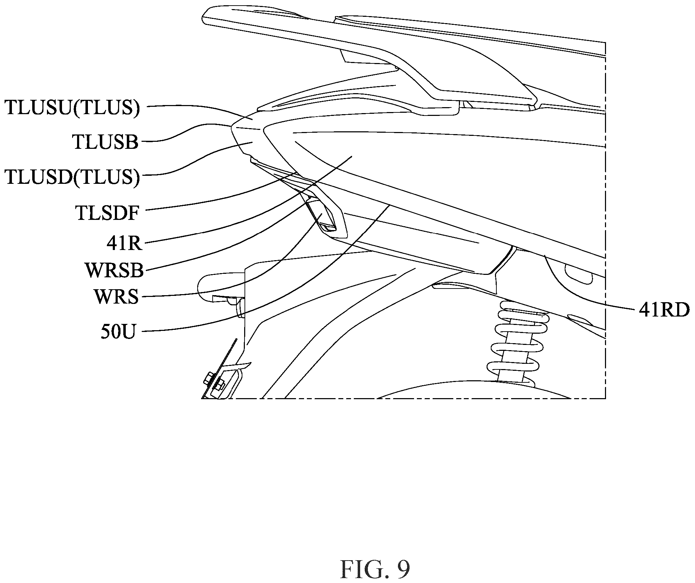

In addition, as shown in FIGS. 8 and 9, more preferably, the rear end WLSB of the left winker light-emitting surface WLS of the left winker WL and the rear end WRSB of the right winker light-emitting surface WRS of the right winker WR are disposed further forward than the rear end TLUSB of the light-emitting surface TLUS which is the rear end of the taillight unit TLU in the side view. In this manner, like the trend of the lower edge 50D of the winker cover 50, the rear end TLUSB of the light-emitting surface TLUS of the taillight unit TLU is positioned further upward and rearward than the rear end WLSB of the left winker light-emitting surface WLS and the rear end WRSB of the right winker light-emitting surface WRS. As a result, the rear portion of the vehicle can become thinner toward the rear. Therefore, the vehicle is reduced in size and the scooter-type vehicle 1 becomes a sportier vehicle.

In addition, more preferably, the rear end WLSB of the left winker light-emitting surface WLS and the rear end WRSB of the right winker light-emitting surface WRS are disposed further forward than the front end TLUSDF of the lower light-emitting surface TLSD of the taillight unit TLU in the side view. In this manner, like the trend of the lower edge 41LD of the left side cover 41L, the lower edge 41RD of the right side cover 41R, and the lower edge 50D of the winker cover 50, the rear end TLUSB of the light-emitting surface TLS of the taillight unit TLU is positioned further upward and rearward than the rear end WLSB of the left winker light-emitting surface WLS and the rear end WRSB of the right winker light-emitting surface WRS. As a result, the rear portion of the vehicle become further thinner toward the rear. In addition, since the left winker light-emitting surface WLS and the right winker light-emitting surface WRS do not overlap with the lower light-emitting surface TLSD of the taillight unit TLU in the front-rear direction of the vehicle, it is possible to more clearly distinguish between the light from the taillight unit TLU and the light from the left and right winkers WL, WR in the side view and the identification of both lights can be ensured. Therefore it is possible to ensure the identification of the taillight unit TLU and the left and right winkers WL, WR in the side view while reducing the size of the vehicle.

In addition, more preferably, the left winker light-emitting surface WLS extends downward and forward from the rear end WLSB, and the right winker light-emitting surface WRS extends downward and forward from the rear end WRSB in the side view as well as the lower light-emitting surface TLUSD of the taillight unit TLU. As a result, the left winker light-emitting surface WLS and the right winker light-emitting surface WRS also have a shape which becomes thinner toward the rear in the side view as well as the taillight unit TLU and this configuration further contributes to creating the sporty vehicle.

### < External configuration of the taillight unit>

The taillight unit TLU according to the present embodiment is a unit structure in which a configuration of a taillight TL, a stop light SL, and a partition member E is housed in an internal space which is formed from a single shared translucent cover TLUC and a single shared housing TLUH. The taillight TL, the stop light SL, and the partition member E are described below.

As shown in FIGS. 1-4, the taillight unit TLU is disposed lower than the seat 9 and between the left side cover 41L and the right side cover 41R at the rear side of the scooter-type vehicle 1. Furthermore, the taillight unit TLU is disposed between the left side cover 41L and the right side cover 41R, and between the upper cover 42 and the winker cover 50 at the rear side of the scooter-type vehicle 1.

When the taillight unit TLU is disposed at the rear portion of the vehicle, as described above, the rear ends 41LB, 41RB of the side cover 41 overlap the taillight unit TLU in the side view. Therefore, as shown in FIGS. 1 and 2, a portion of the taillight unit TLU is covered from both sides of the taillight unit TLU in the left-right direction by the side cover 41 of the rear cover 40. In addition, a portion of the taillight unit TLU is covered from the upper side of the taillight unit TLU by the upper cover 42 of the rear cover 40. In addition, a portion of the taillight unit TLU is covered from the lower side of the taillight unit TLU by the winker cover 50 of the rear cover 40.

In the present invention, the translucent cover TLUC is made, for example, of a transparent or colored transparent resin. As shown in FIGS. 1 ~ 5, an entire portion or a portion of the translucent cover TLUC of the taillight unit TLU is exposed without being covered by the rear cover 40. An exposed outer surface of the translucent cover TLUC, which is not covered by the rear cover 40, is referred to as the light-emitting surface TLUS. In other words, the taillight unit TLU includes a light-emitting surface TLUS. Since the light emitted from the taillight source TLG or the stop light source SLG described below is transmitted to the outside through the light-emitting surface TLUS, it is possible to confirm the light emitted from the taillight unit TLU from the outside.

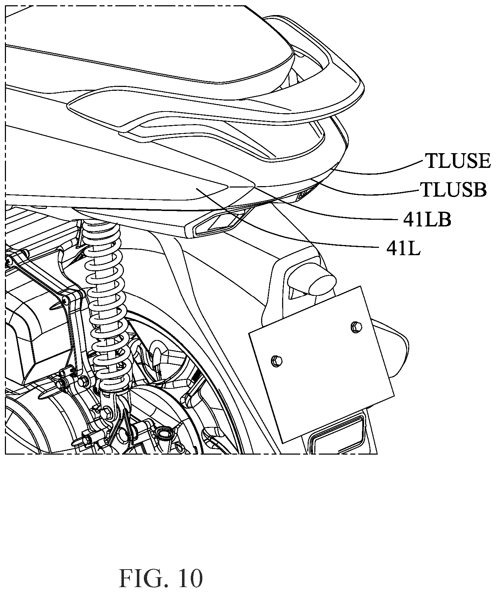

In addition, as shown in FIGS. 1, 2, 8, and 9, the light-emitting surface TLUS includes an upper light-emitting surface TLUSU extending upward and forward from the rear end TLUSB and a lower light-emitting surface TLUSD extending downward and forward from the rear end TLUSB in the side view. In other words, the translucent cover TLUC includes the upper light-emitting surface TLUSU not covered by the rear cover 40 and including an upper edge extending upward and forward from the rear end TLUSB of the translucent cover TLUC in the side view, and the lower light-emitting surface TLUSD not covered by the rear cover 40 and including a lower edge extending downwardand forward from the rear end TLUSB of the translucent cover TLUC in the side view. As shown in FIG. 10, the light-emitting surface TLUS includes the upper light-emitting surface TLUSU extending upward and forward from a rear edge TLUSE of the light-emitting surface TLUS, and the lower light-emitting surface TLUSD extending downward and forward from the rear edge TLUSE of the light-emitting surface TLUS. Besides, the rear end TLUSB of the light-emitting surface TLUS is a rear end TLUSB of the translucent cover TLUC in the side view, and the rear edge TLUSE of the translucent cover TLUC is a rear edge TLUSE of the light-emitting surface TLS. Therefore, the taillight TL also has a shape which becomes thinner toward the rear in the side view and contributes to creating a sporty appearance for the vehicle. At the same time, since the taillight unit TLU has the light-emitting surface TLUS, it is easy for the driver of the following vehicle to confirm a lighting state of the taillight unit TLU from the light-emitting surface TLUS and the visual recognition of the taillight unit TLU can be ensured.

To explain in more detail, in the present invention, a portion of the translucent cover TLUC, which is covered by the rear cover 40 and does not belong to the light-emitting surface TLUS, refers to a portion of the translucent cover TLUC where the light, which is emitted from the taillight source TLG, cannot be confirmed from any point viewed from the outside. Therefore, for example, the portion of the translucent cover TLUC, where the light emitted from the taillight source TLG cannot be confirmed with a visual line from the upper side but can be confirmed with the visual line from the rear side, belongs to the light-emitting surface TLUS and does not correspond to the portion which is covered by the rear cover 40.

Furthermore, the upper light-emitting surface TLUSU and the lower light-emitting surface TLUSD may be formed so as to extend linearly or to extend in an arc shape. In this embodiment, the upper light-emitting surface TLUSU and the lower light-emitting surface TLUSD extend so as to form a slight arc in the side view.

As shown in FIGS. 8-9, the rear end TLUSB of the light-emitting surface TLUS, i.e., the rear end TLSB of the translucent cover TLUC, is disposed behind the rear ends 41LB, 41RB of the side cover 41. Therefore, at least a portion of the light-emitting surface TLUS is not covered by the side covers 41L, 41R in the side view of the vehicle. As a result, it is possible to ensure the visual recognition of the taillight TL from the sides while making the taillight unit TLU compact, since the light-emitting surface TLUS of the taillight unit TLU can be observed not only from the rear side or a diagonally rear side of the vehicle but also from the sides.

As shown in FIG. 4, the left and right edges of the upper light-emitting surface TLUSU are respectively adjacent to the upper edge 41LU of the left side cover 41L and the upper edge 41RU of the right side cover 41R. The left and right edges of the lower light-emitting surface TLUSD are respectively adjacent to the lower edge 41LD of the left side cover 41L and the lower edge 41RD of the right side cover 41R. As shown in the rear view of FIG. 4, the bottom edge of the lower light-emitting surface TLUSD is adjacent to the winker cover 50 and the top edge of the upper light-emitting surface TLUSU is adjacent to the upper cover 42.

In addition, more preferably, as shown in the side views of FIGS. 1 and 2 and in the rear view of FIG. 4, the lower end of the left edge of the upper light-emitting surface TLUSU, i.e., the upper end of the left edge of the lower light-emitting surface TLUSD, is adjacent to the rear end 41LB of the left side cover 41L where the upper edge 41LU and the lower edge 41LD of the left side cover 41L intersect. Similarly, the lower end of the right edge of the upper light-emitting surface TLUSU, i.e., the upper end of the right edge of the lower light-emitting surface TLUSD, is adjacent to the rear end 41RB of the right side cover 41R where the upper edge 41RU and lower edge 41RD of the right side cover 41R intersect.

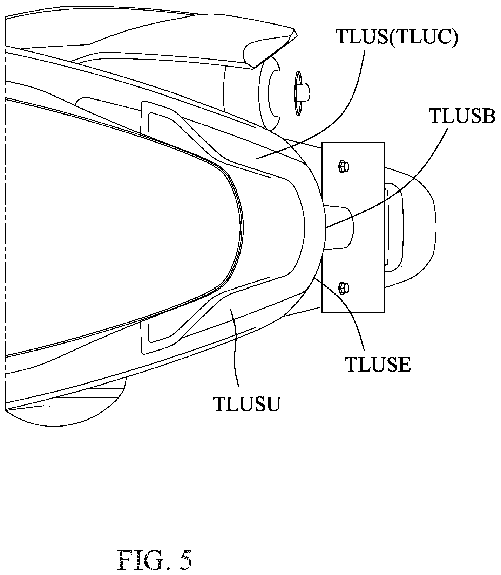

In addition, the rear edge TLUSE of the translucent cover TLUC, i.e., the rear edge TLUSE of the light-emitting surface TLUS, is formed as connected to the rear end 41LB of the left side cover 41L where the upper edge 41LU and the lower edge 41LD of the left side cover 41L intersect and to the rear end 41RB of the right side cover 41R where the upper edge 41RU and the lower edge 41RD of the right side cover 41R intersect, so that a flow line can be formed so as to run from the right side of the vehicle to the rear side and then across to the left side, as shown in FIGS. 4 and 10. In addition, the rear end TLUSB of the light-emitting surface TLUS, i.e., the rear end TLUSB of the translucent cover TLUC, is disposed behind the rear ends 41LB, 41RB of the side covers 41, so that the rear edge TLUSE of the translucent cover TLUC is formed in an arc shape as connected the two rear ends 41LB, 41RB of the side covers 41 as shown in FIG. 4 or FIG. 5. It is possible to ensure the visual recognition of the taillight unit TLU from the sides while making the taillight unit TLU compact, since the light-emitting surface TLUS of the taillight unit TLU can be observed even from the side and the lighting state of the taillight unit TLU can be confirmed as shown in FIGS. 1 and 2.

Furthermore, the rear edge TLUSE of the translucent cover TLUC in this embodiment is formed such as an arc as described above, but the shape of the rear edge TLUSE is not limited to this configuration. As long as the rear edge TLUSE extends from the rear ends 41LB, 41RB of the side covers 41 toward the center of the vehicle in the left-right direction and is formed so that the rear end TLUSB is disposed behind the rear ends 41LB, 41RB of the side covers 41, a similar effect can be achieved. For example, the rear edge TLUSE may be formed substantially V-shaped from the rear ends 41LB, 41RB of the side cover 41.

The taillight TL and the stop light SL are disposed adjacent to each other in the up-down direction on the taillight unit TLU of the rear portion of the scooter-type vehicle 1, described below. In addition, the taillight TL is positioned in the upper side of the stop light SL.

In addition, as shown in FIG. 5, more preferably, the upper light-emitting surface TLUSU of the light-emitting surface TLUS of the taillight unit TLU is formed in a substantially U-shape. Therefore, the left-right width of the taillight unit TLU is restrained while lengthening both sides and it is possible to increase the size of the upper light-emitting surface TLUSU of the light-emitting surface TLUS. Thereby, it is possible to ensure the area of the light-emitting surface TLUS while miniaturizing the taillight unit TLU. As a result, the rear portion of the scooter-type vehicle 1 can be made even smaller while ensuring the visual recognition of the taillight unit TLU.

More preferably, as shown in FIG. 5, a width of the upper light-emitting surface TLUSU in the left-right direction reduces toward the rear side in a plan view. Thereby, the width of the scooter-type vehicle 1 in the left-right direction can become smaller toward the rear. As a result, the rear portion of the scooter-type vehicle 1 can be made even smaller while ensuring the visual recognition of the taillight TL.

### < Internal configuration of the taillight unit>

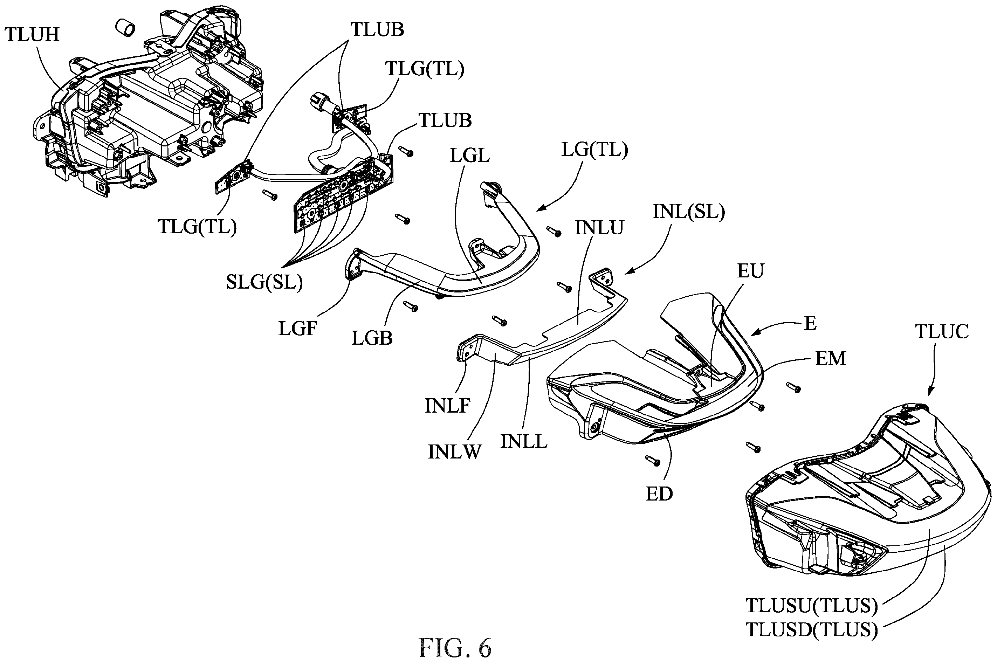

As shown in an exploded view of FIG. 6, in the present embodiment, the taillight unit TLU is assembled sequentially from the front side to the rear side of the vehicle by the housing TLUH, the taillight TL (including the light guide member LG as described below) and the stop light SL (including a stop light inner lens INL) disposed in the up-down direction, the partition member E, and the translucent cover TLUC.

The details of the translucent cover TLUC have been described in the above-described "External configuration of the taillight unit". In the following description, the taillight TL, the stop light SL, and the partition member E, which are disposed in the internal space formed from the single shared translucent cover TLUC and the single shared the housing TLUH of the taillight unit according to the present embodiment, will be sequentially described.

### [Taillight]

In the present embodiment, the taillight TL includes the taillight source TLG which is composed of chip-type LED lamps mounted to a substrate TLUB and the light guide member LG. In addition, the taillight source TLG of the taillight TL is powered by a power supply cable (not shown) which is mounted on the substrate TLUB.

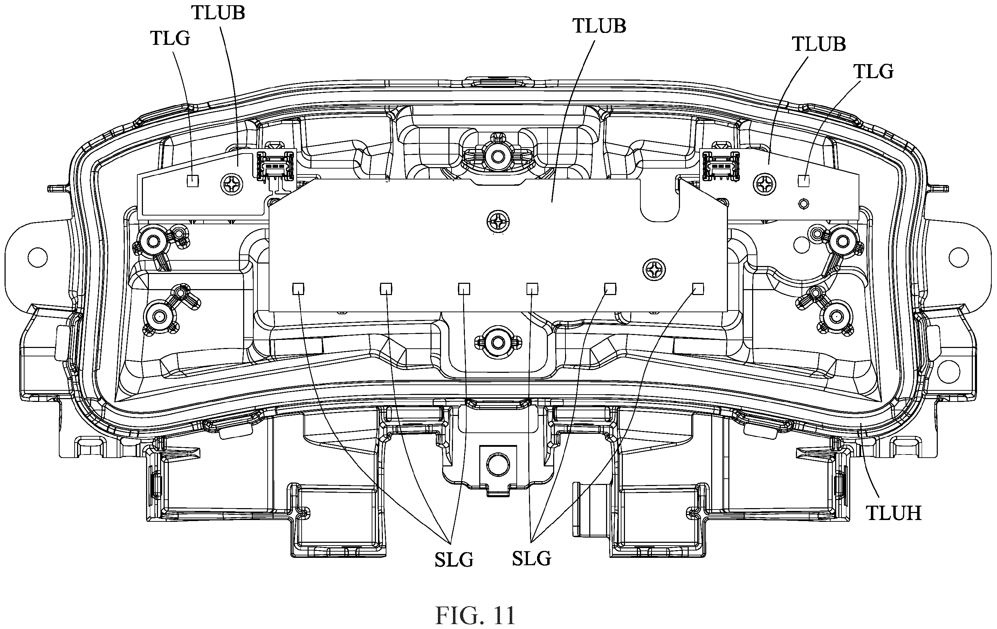

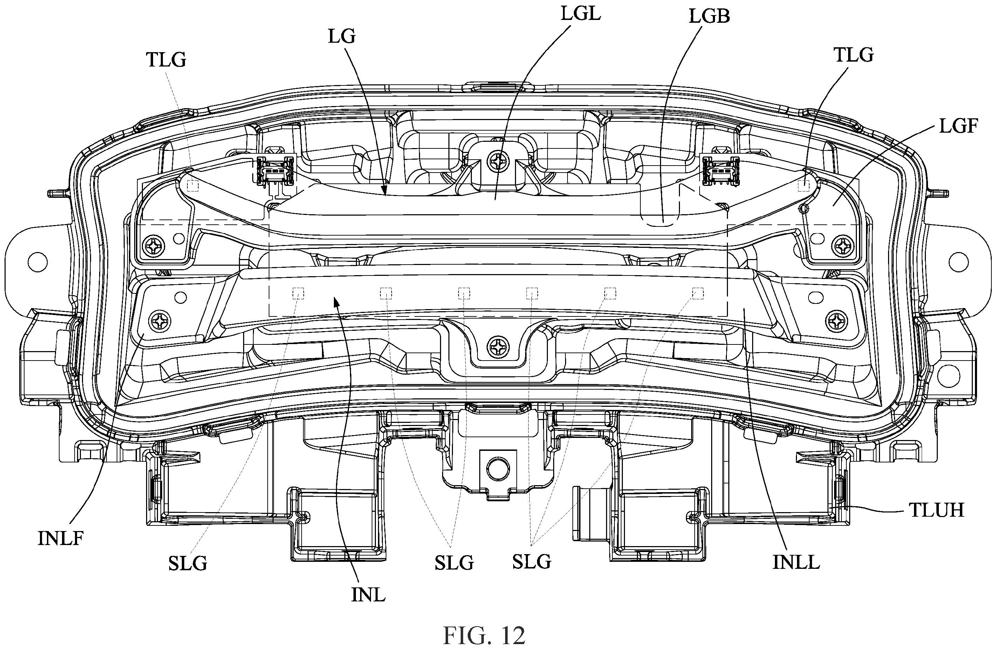

As shown in FIG. 11 in a state where the translucent light cover TLUC, the partition member E, the light guide member LG, and the stop light inner lens INL are removed from the taillight unit TLU, a taillight source TLG is disposed on the left side and another taillight source TLG is disposed on the right side of the substrate TLUB. Then, as shown in FIG. 12, the light guide member LG and the stop light inner lens INL are mounted to the housing TLUH. The light guide member LG includes a light guide LGB which guides light emitted from the light source TLG from both ends. The light guide member LG is fixed to the housing TLUH by flange portion LGF. The light guide member LG is formed in a substantial U-shape as a whole in a plan view, but is not limited to this. For example, the light guide member LG may be formed in a substantial V-shape.

In addition, as shown in the rear view of FIGS. 11 and 12, the taillight TL is disposed at the upper side of the taillight unit TLU. More specifically, the taillight source TLG and the light guide member LG of the taillight TL are disposed above the stop light SL in the up-down direction. As can be seen from the rear view of FIGS. 4, 11 and 12, at least a portion of the light guide LGB of the taillight TL overlaps the upper light-emitting surface TLUSU of the translucent cover TLUC, and at least portion of the stop light SL overlaps the lower light-emitting surface TLUSD of the translucent cover TLUC.

In addition, as shown in FIGS. 6 and 12, in a state where the taillight unit TLU is assembled, the two taillight source TLGs are respectively provided in front of the light guide LGB so as to be adjacent to both ends of the light guide LGB. In other words, the both ends of the U-shaped light guide LGB are disposed further rearward than the two taillight source TLGs in the front-rear direction and toward the two taillight sources TLG in FIG. 12. In addition, a configuration in which the taillight source TLG is provided adjacent to the end of the light guide LGB includes a configuration in which the taillight source TLG is provided in contact with the end of the light guide LGB, and a configuration in which the taillight source TLG is provided at a distance from the end of the light guide LGB and the light emitted from the light source TLG can be guided by the light guide LGB.

In this embodiment, instead of the inner lens or a lens cut, the diffusion area of light can be reduced, since the taillight TL uses the light guide LGB of the light guide member LG. Therefore, the taillight unit TLU can be made more compact. As a result, the rear portion of the scooter-type vehicle 1 is further reduced in size. In addition, in case of being compared with the prior art, the quantity of LEDs referred to as the light source TLG can be reduced, for example, from six (in Patent Document 1) to two, so that manufacturing cost of the taillight unit TLU can also be reduced.

In addition, in this embodiment, the amount of light emitted by the two LED is less than one of the conventional taillight, but it is easier for drivers behind to recognize the light emitted from the upper light-emitting surface TLUSU of the taillight unit TLU by installing the light guide LGB and disposing the taillight TL further upward than the stop light SL. Therefore, high visual recognition of the taillight TL can be ensured.

Furthermore, in the present embodiment, even if the light guide member LG is used in the taillight TL as described above, the lens cut may be provided on the upper light-emitting surface TLUSU of the translucent cover TLUC as necessary.

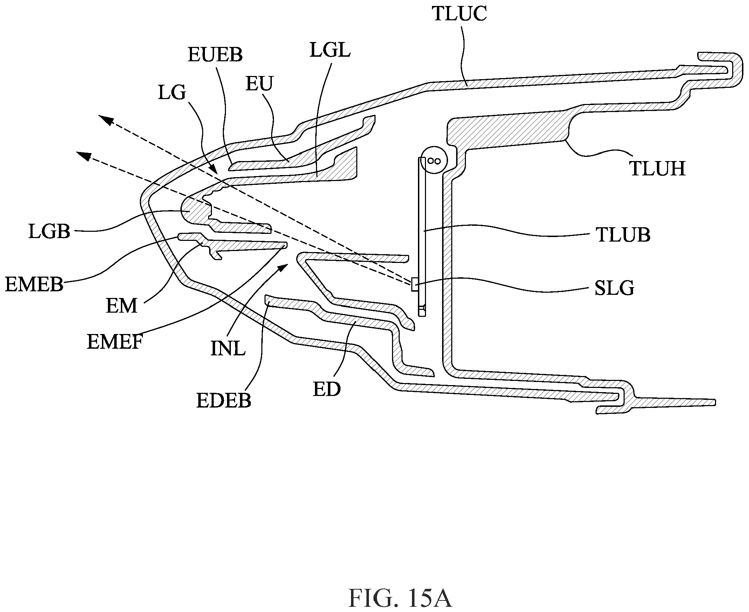

In a more preferred embodiment, as shown in FIGS. 6 and 15A, the light guide member LG further includes a light guide lens portion LGL which is used to diffuse light guided by the light guide LGB to the upper periphery of the light guide LGB. The light guide lens portion LGL extends from the upper portion of the light guide LGB to the front side. As a result, the visual recognition of the taillight TL from the diagonally rear side of the vehicle can be ensured, since the light of the light guide LGB can be further emitted toward the upper light-emitting surface TLUSU.

In the present embodiment, as shown in FIGS. 6 and 11, each of those two chip-type LED lamps is disposed on each of both sides of the substrate TLUB as the taillight source TLG, but a plurality of chip-type LED lamps may be disposed on each of both sides of the substrate TLUB as taillight sources TLG. Furthermore, in the present embodiment, the taillight source TLG is composed of chip-type LED lamps, but it may be composed of another type of light source, for example, light bulbs. The two taillight sources TLG are mounted on two different substrates TLUB as shown in FIGS. 6 and 11, but they could be mounted on the same substrate TLUB.

### [Stop light]

In this embodiment, the stop light SL includes the stop light source SLG which is composed of chip-type LED lamps mounted to the substrate TLUB and the stop light inner lens INL. In addition, the stop light source SLG of the stop light SL is powered by a power supply cable (not shown) which is mounted on the substrate TLUB and the stop light SL is lit.

As shown in FIG. 11, there is a plurality of the stop light sources SLG (there are six in this embodiment) disposed side by side between two taillight sources TLG which are disposed on both sides of the substrate TLUB in the left-right direction. Furthermore, as shown in FIG. 11, the stop light source SLG is disposed on a substrate different from the substrate on which the two taillight source TLGs are mounted, but the stop light source SLG and the taillight source TLG may be disposed on the same substrate TLUB. In addition, as shown in FIG. 6, the stop light source SLG is disposed on the rear side of the vehicle than the taillight source TLG in the front-rear direction, but the stop light source SLG may be disposed on the front side of the taillight source TLG or at the same position as the taillight source TLG in the front-rear direction of the vehicle.

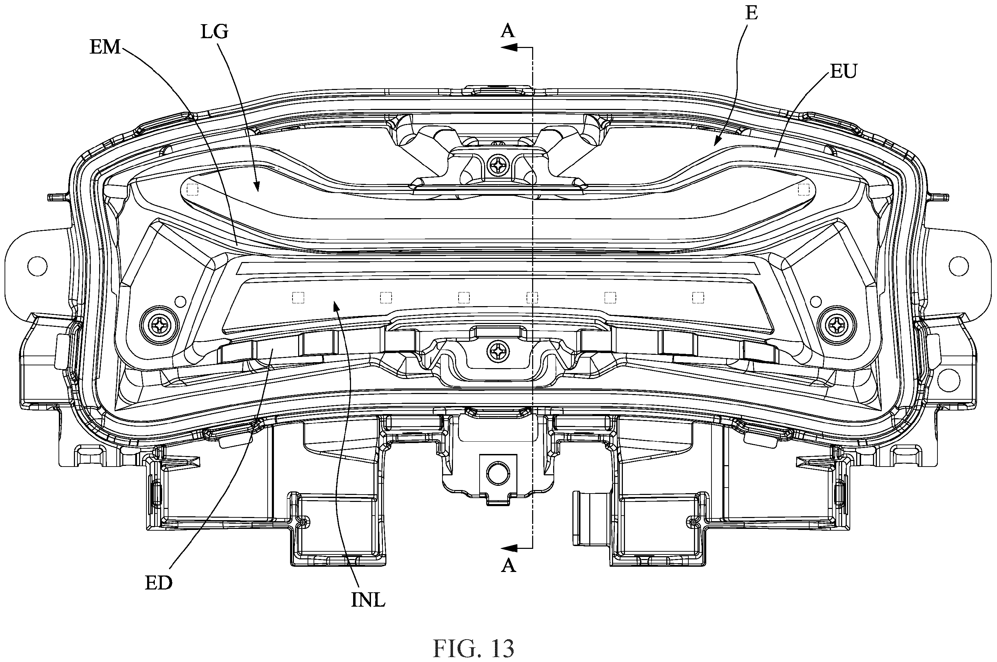

In addition, as shown in FIG. 15A, which is a schematic diagram of FIG. 13 on the A-A cross-section, the stop light source SLG is disposed further forward than at least a portion of the light guide LGB in the front-rear direction and is disposed further forward than the stop light inner lens INL.

In addition, as shown in FIGS. 6 and 12, the stop light inner lens INL includes a flange portion INLF for fixing to the housing TLUH and a lens portion INLL for uniformly diffusing light emitted from the stop light source SLG, which is a chip type LED lamp. The light emitted from the stop light source SLG first passes through the lens portion INLL, then passes through a lower opening EOD between an intermediate member EM and a lower member ED of the partition member E described below, finally passes through the lower light-emitting surface TLUSD of the translucent cover TLUC and is emitted to the outside. Thereby, the driver of the following vehicle can observe the light emitted from the stop light source SLG.

In the present embodiment, the lens portion INLL and the flange portion INLF are connected and integrated by a side wall portion INLW which is substantially orthogonal to the left-right direction on both the left and right sides. The lens portion INLL and the flange portion INLF is formed in a substantial U-shape in the plan view, but is not limited to this configuration. For example, the lens portion INLL and the flange portion INLF may be formed in a substantial V-shape.

More preferably, the stop light inner lens INL further includes a upper surface INLU that is substantially orthogonal in the up-down direction. In addition, the upper portion of each of the lens portion INLL and the side wall portion INLW is connected to the upper surface portion INLU. A left-right range of the lens portion INLL is connected to the upper surface portion INLU. As a result, the strength of the stop light inner lens INL can be ensured. The upper surface portion INLU may be made of a general translucent member, or may be made of a member which uniformly diffuses light in the same manner as the lens portion INLL.

As shown in the rear view of FIGS. 11 and 12, the stop light SL is disposed at the lower portion of the taillight unit TLU. More specifically, the stop light SL is disposed belowthan the taillight TL in the up-down direction of the vehicle. Therefore, as can be seen from the rear view of FIGS. 4, 11 and 12, at least a portion of the light guide member LG of the taillight TL overlaps the upper light-emitting surface TLUSU of the translucent cover TLUC, and at least a portion of the stop light inner lens INL overlaps with the lower light-emitting surface TLUSD of the translucent cover TLUC.

In addition, the stop light source SLG is disposed between the taillight source TLG which are provided adjacent to both ends of the light guide LGB in the left-right direction. In this configuration, the taillight TL and the stop light SL can be disposed in a more compact manner in the up-down direction, since the taillight source TLG, which are provided at both ends of the light guide LGB, are disposed outside the stop light source SLG. As a result, the rear portion of the scooter-type vehicle 1 is further reduced in size.

In the present embodiment, six stop light sources SLG are disposed in a row in the left-right direction of the vehicle, but the stop light source SLG may be formed as a long single light source along the left-right direction of the vehicle. In the present embodiment, the stop light source SLG is composed of chip-type LED lamps as described above, but may be composed of another type of light source, for example, light bulbs.

In the present embodiment, even if the lens unit INLL is used as the stop light SL as described above, the lens cut may be provided on the lower light-emitting surface TLUSD of the translucent cover TLUC as necessary.

### [Partition Member]

As shown in the exploded view of FIG. 6, the partition member E has a configuration in which the taillight TL and the stop light SL are divided in the internal space formed by the translucent cover TLUC and the housing TLUH. As shown in the exploded view of FIG. 6, the partition member E is sandwiched between the translucent cover TLUC, and the taillight TL and the stop light SL disposed side by side in the up-down direction, in the front-rear direction. In addition, as shown in FIG. 15A, which is the schematic diagram of FIG. 13 on the A-A cross-section, the partition member E divides the internal space of the taillight unit TLU into spaces in which the taillight TL and the stop light SL are respectively positioned, in the up-down direction.

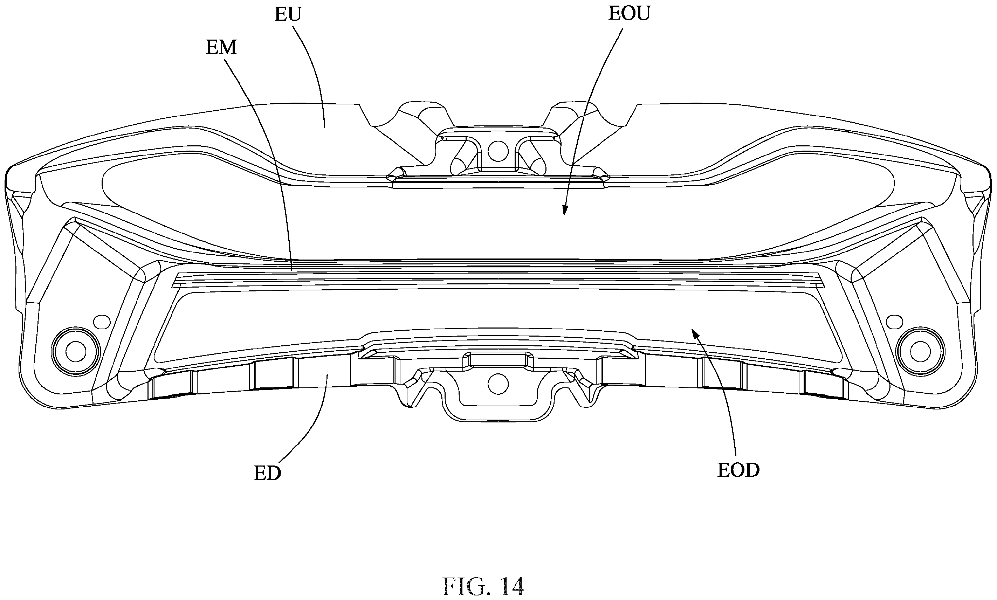

More specifically, as shown in FIGS. 13 and 14 in a state where the translucent cover TLUC removed, in the present embodiment, in the up-down direction of the vehicle, the partition member E includes an upper member EU which covers at least a portion of the light guide member LG from above, the intermediate member EM of which at least a portion thereof is disposed between the light guide member LG and the stop light inner lens INL, and the lower member ED which covers at least a portion of the stop light inner lens INL from below.

As shown in FIGS. 6 and 10, in the present embodiment, the intermediate member EM matches the shape of the upper light-emitting surface TLUSU and the lower light-emitting surface TLUSD of the translucent cover TLUC, and a rear edge EMEB thereof is disposed further rearward thana rear edge EUEB of the upper member EU and a rear edge EDEB of the lower member ED. Furthermore, in the present embodiment, the upper member EU and the intermediate member EM are connected to each other at the front portion of them. In addition, the intermediate member EM and the lower member ED are connected to each other at the front portion of them and are connected to each other at the side portions of them. Therefore, the partition member E is formed so that the upper member EU, the intermediate member EM, and the lower member ED are integrated to ensure their strength.

In the internal space of the taillight unit TLU, the spaces, in which the taillight TL and the stop light SL are respectively positioned, are divided by the upper member EU, the intermediate member EM, and the lower member ED of the partition member E, and are disposed side by side in the up-down direction. Since the stop light SL is disposed below the taillight TL as described above, as can be seen from FIGS. 4, 11 and 12, at least a portion of the light guide member LG overlaps the upper light-emitting surface TLUSU of the translucent cover TLUC in the rear view and at least a portion of the stop light inner lens INL overlaps the lower light-emitting surface TLUSD of the translucent cover TLUC in the rear view.

In addition, as shown in FIG. 14, an upper opening EOU is formed between the upper member EU and the intermediate member EM, and a lower opening EOD is formed between the intermediate member EM and the lower member ED. As shown in FIG. 13, at least a portion of the light guide member LG of the taillight TL can be recognized from the upper opening EOU, and at least a portion of the stop light inner lens INL of the stop light SL can also be recognized from the lower opening EOD. In other words, the light emitted from the taillight TL can be recognized from the upper opening EOU through the translucent cover TLUC in the rear view, and the light emitted from the stop light SL can be recognized from the lower opening EOD in the rear view. In the present embodiment, the upper opening EOU is formed in a substantial U-shape in the plan view so as to match the shape of the upper light-emitting surface TLUSU. In the present embodiment, the shape of the upper opening EOU and the lower opening EOD is formed so that the upper light-emitting surface TLUSU and the lower light-emitting surface TLUSD are not blocked by the partition member E from the inside.

As shown in FIG. 15A, which is the schematic diagram of FIG. 13 on the A-A cross-section, the taillight unit TLU is disposed so that at least a portion of the light emitted from the stop light source SLG is not blocked by the partition member E, and is emitted to the outside after passes through the upper opening EOU and the light guide member LG.

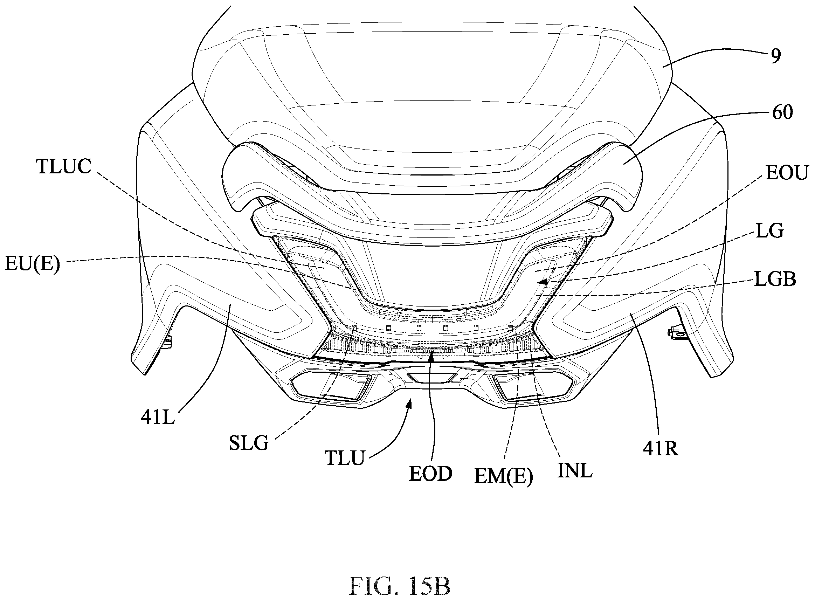

In other words, the light emitted from the stop light source SLG can be recognized in a predetermined angle range when viewing the vehicle forward and downward from behind. For example, as shown in FIG. 15B which is a schematic diagram of a part of the taillight unit TLU when viewing the vehicle forward and downward from behind at 35 degrees with respect to the horizontal direction, at least a portion of the light guide member LG and at least a portion of the stop light source SLG are placed within a range of the upper opening EOU of the partition member E when viewing the vehicle forward and downward from behind at this angle. Since at least a portion of the light, which is emitted from the stop light source SLG and passes through the light guide member LG, is not blocked by the partition member E, at least a portion of the light can be confirmed when viewing the vehicle forward and downward from behind at this angle. Besides, in FIG. 15B, the stop light inner lens INL is omitted.

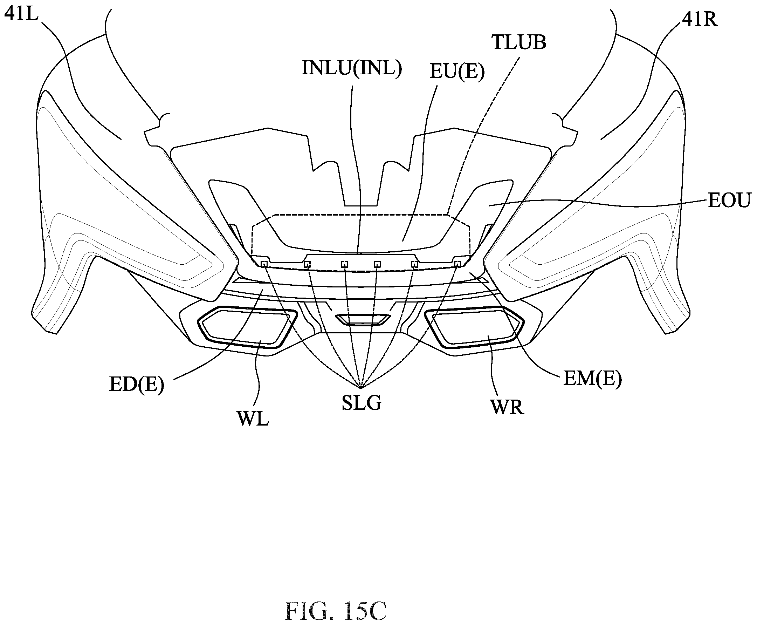

FIG. 15C is the schematic diagram of the part of the taillight unit TLU when viewing the vehicle forward and downward from behind at 25 degrees with respect to the horizontal direction. In FIG. 15C, the upper cover 42, the translucent cover TLUC, and the light guide member LG are omitted. Unlike FIG. 15B, when viewing the vehicle as shown in FIG. 15C, since the range of the upper opening EOU appears larger, the stop light source SLG of the stop light SL and the upper surface portion INLU of the stop light inner lens INL can be observed more widely. As shown in FIG. 15C, at least a portion of the upper surface portion INLU of the stop light inner lens INL and at least a portion of the stop light source SLG are placed within the range of the upper opening EOU of the partition member E when viewing the vehicle forward and downward from behind at this angle. In other words, since at least a portion of the light, which is emitted from the stop light source SLG and passes through the light guide member LG, is not blocked by the partition member E, at least a portion of the light can be confirmed when viewing the vehicle forward and downward from behing at this angle. More specifically, the position of the rear edge EUEB of the upper member EU in the front-rear direction and the position of the front edge EMEF of the intermediate member EM in the front-rear direction are set so that the light, which is emitted from the stop light source SLG, can pass through the upper opening EOU diagonally, rearwardly and upwardly from the front and can emit to the outside. At least a portion of the light, which is emitted from the stop light source SLG, passes through the stop light inner lens INL and the light guide member LG, and then is not blocked by the partition member E, passes through between the rear edge EUEB of the upper member EU and the front edge EMEF of the intermediate member EM of the partition member E, and is emitted to the outside after passes through the upper opening EOU. Thereby, the light, which is emitted from the stop light SL disposed at the lower portion of the taillight unit TLU, reaches the driver's eye of the following vehicle without being blocked by the partition member E, when the driver of the following vehicle views the taillight unit TLU of the vehicle forward and downward from behind. Therefore, the light, which is emitted from the stop light SL disposed at the lower portion of the taillight unit TLU, can be easily recognized even when the driver of the following vehicle is close to the vehicle.

Furthermore, FIGS. 15B and 15C are examples when viewing the vehicle forward and downward from behind at 35 degrees and 25 degrees with respect to the horizontal direction. In the present embodiment, the angle range can be set so that the stop light source SLG can be recognized in a range from 20 degrees to 80 degrees, when viewing the vehicle forward and downward from behind. In this embodiment, the optimum angle range, in which the entire portion of the stop light source SLG can be recognized, is a range from 25 degrees to 35 degrees as shown in FIGS. 15B and 15C.

Thus, the light, which is emitted from the stop light SL, can be easily recognized not only from the lower light-emitting surface of the taillight unit TLU but also from the upper light-emitting surface TLUSU. Therefore, the high visual recognition of the stop light SL can be further ensured. In addition, the intensity of the light source of the stop light SL is usually set stronger than the intensity of the light source of the taillight TL. Even when the taillight TL and the stop light SL are lit at the same time, the light of the stop light source SLG, which is transmitted through the upper light-emitting surface TLUSU, is brighter, so that the driver of the following vehicle, which observes the vehicle from behind with the view line toward the front side and the lower side, can very easily identify the change that the stop light source SLG is lit. Therefore, even if the stop light SL is disposed at the lower portion of the taillight unit TLU, the visual recognition of the stop light SL at the position approaching from the rear side can be further ensured. At the same time, the high visual recognition of the taillight TL and the stop light SL can be ensured.

As a result, the present invention can ensure the identification of the taillight TL and the stop light SL while further ensuring the visual recognition of the stop light SL at the rear portion of the vehicle, and can restrain the rear portion of the vehicle from increase in size.

In addition, as shown in FIG. 13, more preferably, the intermediate member EM of the partition member E is disposed across from the left end to the right edge of the stop light inner lens INL.

Thereby, when viewed from the rear side of the vehicle, the intermediate member EM of the partition member E functions as a substantial partition of the entity between the taillight TL and the stop light SL. Therefore, when the taillight TL and the stop light SL are lit at the same time, the intermediate member EM becomes a clear boundary between the taillight TL and the stop light SL. As a result, the light, which is emitted by each of the taillight TL and the stop light SL, can be more easily distinguished and the identification of the taillight TL and the stop light SL can be ensured.

More preferably, as shown in FIG. 15A, at least a portion of the front edge EMEF of the intermediate member EM of the partition member E is formed so that it is disposed further rearward than the stop light inner lens INL in the front-rear direction. Therefore, the light, which is emitted from the stop light source SLG, can be transmitted through the stop light inner lens INL, the light guide LGB, and the light-emitting surface TLUCU of the translucent cover TLUC in order toward the rear side and the upper side without being blocked by the partition member E. As a result, the identification of the taillight TL and the stop light SL can be ensured when the taillight TL and the stop light SL are lit at the same time, and the light, which is emitted from the stop light SL disposed at the lower portion of the taillight unit TLU, can be more reliably recognized when the driver of the following vehicle is approaching.

More preferably, as shown in FIG. 15A, at least a portion of the rear edge EUEB of the upper member EU of the partition member E is disposed further rearward than the front edge EMEF of the intermediate member EM in the front-rear direction and further forward than the light guide LGB in the front-rear direction. At least a portion of the rear edge EUEB of the upper member EU is disposed further rearward than at least a portion of the front edge EMEF of the intermediate member EM in the front-rear direction, so that the strength of the partition member E can be ensured since the upper opening EOU is not too large. In addition, at least a portion of the rear edge EUEB of the upper member EU is disposed further rearward than at least a portion of the light guide LGB in the front-rear direction, so that the light, which is emitted from the stop light source SLG, can reliably transmit through the upper light-emitting surface TLUCU of the translucent light cover TLUC. As a result, the light, which is emitted from the stop light SL disposed at the lower portion of the taillight unit TLU, can be more reliably recognized when the driver of the following vehicle is approaching, while ensuring the strength of the partition member E.

In addition, more preferably, as shown in FIG. 15A, the light guide member LG is disposed so that at least a portion of the light, which is emitted from the stop light source SLG, passes through the light guide LGB and then is emitted to the outside. In other words, when viewing the vehicle forward and downward from behind , the light guide LGB is disposed so that at least a portion of the light guide LGB overlaps the stop light source SLG. With such a configuration, the light, which is emitted from the stop light source SLG, first transmits the light guide LGB before passing through the upper light-emitting surface TLUSU. The light guide LGB has the function of guiding and concentrating the transmitting light. Therefore, since the light, which is emitted from the stop light source SLG, can be concentrated on the light guide LGB before passing through the upper light-emitting surface TLUSU. As a result, the identification of the stop light SL can be ensured when the taillight TL and the stop light SL are lit at the same time.

### (Effects of the embodiment)

[C1] The scooter-type vehicle 1 of the present invention comprises a seat 9 on which a rider sits, a seat rail 24 supporting the seat 9 and extending toward a rear side, a rear cover 40 including a left side cover 41L and a right side cover 41R disposed lower than the seat 9 and outside the seat rail 24 on a left side and a right side of the vehiclerespectively, and a taillight unit TLU disposed between the left side cover 41L and the right side cover 41R in a rear view. The taillight unit TLU includes a translucent cover TLUC, a housing TLUH forming an internal space with the translucent cover TLUC, a taillight TL including a taillight source TLG and a light guide member LG having a light guide LGB which guides light emitted from the taillight source TLG, a stop light SL including a stop light source SLG, and a partition member E. The taillight source TLG, the stop light source SLG, and the partition member E are disposed in the internal space. The partition member E divides the internal space into arrangement spaces of the taillight TL and the stop light SL in an up-down direction. In a plan view, the taillight source TLG is provided adjacent to both ends of the light guide LGB and the stop light source SLG is disposed further forward than at least a portion of the light guide LGB in a front-rear direction. The translucent cover TLUC includes an upper light-emitting surface TLUSU, which is not covered by the rear cover 40, extending upward and forward from a rear edge of the translucent cover TLUC and a lower light-emitting surface TLUSD, which is not covered by the rear cover 40, extending downward and forward from the rear edge of the translucent cover TLUC. In the rear view, at least a portion of the light guide LGB overlaps the upper light-emitting surface TLUSU, and the stop light source SLG overlaps the lower light-emitting surface TLUSD. The taillight unit TLU is formed so that at least a portion of the light, which is emitted from the stop light source SLG, is not blocked by the partition member E and is emitted to the outside through the light guide member LG.

According to the present invention, in the vehicle of the present application, the lens cut corresponding to the taillight TL and the inner lens are changed to the light guide LGB, so that the diffusion area of the light can be reduced. Therefore, the taillight unit TLU can be made more compact. As a result, the rear portion of the vehicle can be reduced in size. In addition, in case of being compared with the prior art, the quantity of LED referred to as the light source TLG can be reduced, for example, from six (in Patent Document 1) to two, so that manufacturing cost of the taillight unit TLU can also be reduced.

In addition, the amount of the emitted light is less by changing to the light guide LGB, but it is sufficiently easy for the driver of the following vehicle to recognize the light, which is emitted from the upper light-emitting surface TLUSU of the taillight unit TLU by the taillight TL, by swappingthe arrangement positions of the taillight TL and the stop light SL and placing the taillight TL higher than the stop light SL in the up-down direction. Therefore, the high visual recognition of the taillight TL and the stop light SL can be ensured.

In addition, in the present invention, the taillight unit TLU is disposed so that at least a portion of the light, which is emitted from the stop light source SLG, is not blocked by the partition member E and can be emitted to the outside after passing through the light guide member LG. Thereby, the light, which is emitted from the stop light SL disposed at the lower portion of the taillight unit TLU, passes through the translucent cover TLUC and then reaches the driver's eye of the following vehicle without being blocked by the partition member E, when the driver of the following vehicle views the taillight unit TLU of the vehicle forward and downward from behind. Therefore, the light, which is emitted from the stop light SL disposed at the lower portion of the taillight unit TLU, can be easily recognized even when the driver of the following vehicle is close to the vehicle.

Thus, the light, which is emitted from the stop light SL disposed at the bottom of the taillight unit TLU, can be easily recognized not only from the lower light-emitting surface TLUSD of the taillight unit TLU but also from the upper light-emitting surface TLUSU. Therefore, the high visual recognition of the taillight TL and the stop light SL can be ensured.

In addition, the intensity of the light source of the stop light SL is usually set stronger than the intensity of the light source of the taillight TL. Even when the taillight TL and the stop light SL are lit at the same time, the light of the stop light source SLG, which is transmitted through the upper light-emitting surface TLUSU, is brighter, so that the driver of the following vehicle, which observes the vehicle from behind with the view line toward the front side and the lower side, can very easily identify the change that the stop light source SLG is lit. Therefore, even if the stop light SL is disposed at the lower portion of the taillight unit TLU, the visual recognition of the stop light SL can be ensured. At the same time, the high visual recognition of the taillight TL and the stop light SL can be ensured.

As a result, the present invention can ensure the identification of the taillight TL and the stop light SL while ensuring the visual recognition of the stop light SL at the rear portion of the vehicle, and can restrain the rear portion of the vehicle from increase in size.

[C2] In one preferred embodiment of the present invention, the stop light SL further includes a stop light inner lens INL disposed further backward than the stop light source SLG. The partition member E includes an intermediate member EM which is disposed between the light guide LGB and the stop light inner lens INL from a left side of the stop light inner lens INL to a right side of the stop light inner lens INL in the rear view.

According to one preferred embodiment of the present invention, when viewed from the rear side of the vehicle, the intermediate member EM of the partition member E functions as a substantial partition wall between the taillight TL and the stop light SL. Therefore, when the taillight TL and the stop light SL are lit at the same time, the intermediate member EM becomes a clear boundary between the taillight TL and the stop light SL. As a result, the light, which is emitted by each of the taillight TL and the stop light SL, can be more easily distinguished and the identification of the taillight TL and the stop light SL can be ensured.

[C3] In one preferred embodiment of the present invention, at least a portion of a front edge EMEF of the intermediate member EM of the partition member E is formed so as to be positioned further backward than the stop light inner lens INL in the front-rear direction.

According to one preferred embodiment of the present invention, the light, which is emitted from the light source of the stop light SL, can be transmitted through the stop light inner lens INL, the light guide member LG, and the upper light-emitting surface TLUCU of the translucent cover TLUC in order toward the rear side and the upper side in a wider angle range, by limiting the position of the front edge EMEF of the intermediate member EM of the partition member E. As a result, the identification of the taillight TL and the stop light SL can be ensured when the taillight TL and the stop light SL are lit at the same time and the light, which is emitted from the stop light SL disposed at the lower portion of the taillight unit TLU, can be more reliably recognized when the driver of the following vehicle is approaching.

[C4] In one preferred embodiment of the present invention, the partition member E further includes an upper member EU which is provided in an upper side of the intermediate member EM in a up-down direction. At least a portion of a rear edge EUEB of the upper member EU is disposed further backward than the front edge EMEF of the intermediate member EM and further forward than the light guide LGB in the front-rear direction.

According to one preferred embodiment of the present invention, the strength of the partition member E can be ensured, since the upper opening EOU between the upper member EU and the intermediate member EM is not too large by limiting the position of at least a portion of the rear edge EUEB of the upper member EU of the partition member E. The light, which is emitted from the stop light source SLG, can pass through the front side of the front edge EMEF of the intermediate member EM and the rear side of the rear edge EUEB of the upper member EU diagonally, rearwardly and upwardly from the front. As a result, the identification of the taillight TL and the stop light SL can be ensured and the light, which is emitted from the stop light SL disposed at the lower portion of the taillight unit TLU, can be more reliably recognized when the driver of the following vehicle is approaching.

[C5] In one preferred embodiment of the present invention, the light guide member LGis disposed so that at least a portion of the light, which is emitted from the stop light source SLG, is emitted to the outside through the light guide LGB.

According to one preferred embodiment of the present invention, the light, which is emitted from the stop light source SLG and passes through the upper light-emitting surface TLUSU of the translucent cover TLUC, passes through the light guide LGB before passing through the upper light-emitting surface TLUSU. The light guide LGB has the function of guiding and concentrating the transmitting light. Therefore, since the light, which is emitted from the stop light source SLG and passes through the upper light-emitting surface TLUSU of the taillight unit TLU, is concentrated by the light guide LGB before passing through the upper light-emitting surface TLUSU, the identification of the taillight TL and the stop light SL can be ensured when the taillight TL and the stop light SL are lit at the same time.

[C6] In one preferred embodiment of the present invention, the stop light source SLG is disposed between taillight sources TLG provided adjacent to both ends of the light guide LGB in a left-right direction.

According to one preferred embodiment of the present invention, the taillight TL and the stop light SL can be and disposed in a more compact manner in the up-down direction, since the taillight source TLG, which are provided at both ends of the light guide LGB, are disposed outside the stop light source SLG. As a result, the rear portion of the scooter-type vehicle 1 is further reduced in size.

[C7] In one preferred embodiment of the present invention, the stop light SL has a plurality of the stop light sources SLG and the plurality of the stop light sources SLG are disposed side by side in the left-right direction.

According to one preferred embodiment of the present invention, it is easy for the driver of the following vehicle to recognize the light when the stop light SL is lit and the identification of the stop light SL can be ensured, since the plurality of stop light sources SLG are disposed side by side in the left-right direction.

[C8] In one preferred embodiment of the present invention, the upper light-emitting surface TLUSU of the taillight unit TLU is formed in a substantially U-shape in the plan view.

According to one preferred embodiment of the present invention, since the upper light-emitting surface TLUSU of the taillight unit TLU is U-shaped in the plan view, the width in the left-right direction of the taillight unit TLU is restrained while lengthening both sides. Thereby, it is possible to ensure the area of the light-emitting surface TLUS while miniaturizing the taillight unit TLU. As a result, the rear portion of the scooter-type vehicle 1 can be made even smaller while ensuring the visual recognition of the taillight unit TLU.

[C9] In one preferred embodiment of the present invention, a width of the upper light-emitting surface TLUSU of the taillight unit TLU in the left-right direction is reduced toward the rear side in the plan view.

According to one preferred embodiment of the present invention, the width of the vehicle in the left-right direction can become smaller toward the rear, since the width of the upper light-emitting surface TLUSU of the taillight unit TLU in the left-right direction is reduced toward the rear side in the plan view. As a result, the rear portion of the scooter-type vehicle 1 can be made even smaller while ensuring the visual recognition of the taillight TL.

[C10] In one preferred embodiment of the present invention, the scooter-type vehicle further comprises a light guide lens portion LGL extending forward from the upper portion of the light guide LGB.

According to one preferred embodiment of the present invention, the visual recognition of the taillight TL from the diagonally rear side of the vehicle can be ensured, since the light of the light guide LGB can be further emitted toward the upper light-emitting surface TLUSU.

Although the embodiment of the present invention includes been described above, those skilled in the art can make various design modifications based on the teachings of the present invention without departing from the scope of the present invention.

For example, in the embodiment described above, the body cover 12 such as the front cover 30, the rear cover 40, the footrest portion 31 and the center cover 32 is an exterior member and may be one-piece molded products formed by injection molding, may be configured by multiple members, or may be formed integrally from multiple cover members. For example, in the rear cover 40, the side cover 41, the winker cover 50, and the upper cover 42 may be formed integrally, or may be formed separately and then assembled. Alternatively, the side cover 41 and the winker cover 50, which are integrally formed, may be combined with the separate upper cover 42.

In addition, it is preferable for the vehicle body cover 12 to appear overall symmetrically in the left-right direction in terms of appearance and manufacturing, but it does not have to appear symmetrical.

In this embodiment, when the taillight source TLG is a white chip-type LED lamp and the white chip-type LED lamp of the taillight source TLG does not turn on, the light guide member LG may be red. However, the present invention is not limited to this. For example, when a red chip-type LED lamp may be used and the taillight source TLG does not turn on, the light guide member LG may be milky white.

In addition, in this embodiment, the light guide member LG is a transparent resin to which a light diffusing agent is added, but the present invention is not limited to this. The light guide member LG may have a function which makes the light appear to shine over a wider area than a range of the light source. For example, it may be a transparent resin with lens cut processing or a light guiding rod.

In addition, in this embodiment, the taillight unit TLU includes light guide member LG, but the light guide member LG may be omitted.

In this embodiment, the taillight unit TLU includes an upper light-emitting surface TLSU of the light-emitting surface TLS which is formed in a substantially U-shape. However, the present invention is not limited to this and any shape may be formed such that it limits the left-right width of the taillight and the total area increases by lengthening both sides. For example, it may be other broken line shapes such as a V-shape or a W-shape. It may also be a curved shape or a straight shape.

The present invention is also applicable to the scooter-type vehicle such as a motorcycle, a motorcycle three-wheeler, an electric motorcycle, and an electric three-wheeler.

### REFERENCE SIGNS LIST

1 a scooter-type vehicle
2 a body frame
21 a head pipe
22 a down frame
23 a lower frame
24 a seat rail
3 a steering mechanism
8 a front wheel
9 a seat
10 a power unit
11 a rear wheel
12 a body cover
13 a license bracket
30 a front cover
301 a side cover
302 a rear side cover
303 a front side cover
31 a footrest portion
32 a center cover
40 a rear cover
41 a side cover
41L a left side cover
41LB a rear end
41LD a lower edge
41LU an upper edge
41R a right side cover
41RB a rear end
41RD a lower edge
41RU an upper edge
42 an upper cover
50 a winker cover
50U an upper edge
50D a lower edge
WL a left winker
WLH a housing
WLG a light source
WLC a left winker translucent cover
WLS a left winker light-emitting surface
WLSL a left end
WLSB a rear end
WR a right winker
WRH a housing
WRG a light source
WRC a right winker translucent cover
WRS a right winker light-emitting surface
WRSB a rear end
TLU a taillight unit
TLUH a housing
TLUC a translucent cover
TLUS a light-emitting surface
TLUSU an upper light-emitting surface
TLUSD a lower light-emitting surface
TLUSDF a front end
TLUSL a left end
TLUSR a right end
TLUSB a rear end
TLUSE a rear edge
TLUB a substrate
TL a taillight
TLG a taillight source
LG a light guide member
LGF a flange portion
LGB a light guide
LGL a light guide lens portion
SL a stop light
SLG a stop light source
INL a stop light inner lens
INLF a flange portion
INLL a lens unit
INLW a side wall portion
INLU an upper surface portion
E a partition member
EU an upper member
EUEB a rear edge
EM an intermediate member
EMEF a front edge
EMEB a rear edge
ED a lower member
EDEB a rear edge
EOU an upper opening
EOD a lower aperture
lower opening
Upper aperture

## Claims

1. A scooter-type vehicle comprising:
a seat on which a rider sits;
a seat rail supporting the seat and extending toward a rear side of the vehicle;
a rear cover including a left side cover and a right side cover disposed lower than the seat and outside the seat rail on a left side and a right side of the vehicle respectively; and
a taillight unit disposed between the left side cover and the right side cover in a rear view; wherein
the taillight unit includes;
a translucent cover;
a housing forming an internal space with the translucent cover;
a taillight including a taillight source and a light guide member having a light guide which guides light emitted from the taillight source;
a stop light including a stop light source; and
a partition member;
the taillight source, the stop light source, and the partition member are disposed in the internal space;
the partition member divides the internal space into arrangement spaces of the taillight and the stop light in an up-down direction;
in a plan view, the taillight source is provided adjacent to both ends of the light guide, and the stop light source is disposed further forward than at least a portion of the light guide in a front-rear direction;
the translucent cover includes a upper light-emitting surface, which is not covered by the rear cover, extending upward and forward from a rear edge of the translucent cover and a lower light-emitting surface, which is not covered by the rear cover, extending downward and forward from the rear edge of the translucent cover;
in the rear view, at least a portion of the light guide overlaps the upper light-emitting surface, and the stop light source overlaps the lower light-emitting surface; and
the taillight unit is formed so that at least a portion of the light, which is emitted from the stop light source, is not blocked by the partition member and is emitted to the outside through the light guide member.

2. The scooter-type vehicle according to claim 1, wherein
the stop light further includes a stop light inner lens disposed further backward than the stop light source,
the partition member includes an intermediate member which is disposed between the light guide and the stop light inner lens from a left side of the stop light inner lens to a right side of the stop light inner lens in the rear view.

3. The scooter-type vehicle according to claim 2, wherein
at least a portion of a front edge of the intermediate member of the partition member is formed so as to be positioned further backward than the stop light inner lens in the front-rear direction.

4. The scooter-type vehicle according to claim 3, wherein
the partition member further includes an upper member which is provided in an upper side of the intermediate member in a up-down direction.
at least a portion of a rear edge of the upper member is disposed further backward than the front edge of the intermediate member and further forward than the light guide in the front-rear direction.

5. The scooter-type vehicle according to any one of claims 1 to 4, wherein
the light guide member is disposed so that at least a portion of the light, which is emitted from the stop light source, is emitted to the outside through the light guide.

6. The scooter-type vehicle according to any one of claims 1 to 5, wherein
the stop light source is disposed between taillight sources provided adjacent to both ends of the light guide in a left-right direction.

7. The scooter-type vehicle according to any one of claims 1 to 6, wherein
the stop light has a plurality of the stop light sources and the plurality of the stop light sources are disposed side by side in the left-right direction.

8. The scooter-type vehicle according to any one of claims 1 to 7, wherein
the upper light-emitting surface of the taillight unit is formed in a substantially U-shape in the plan view.

9. The scooter-type vehicle according to any one of claims 1 to 8, wherein
a width of the upper light-emitting surface of the taillight unit in the left-right direction is reduced toward the rear side in the plan view.

10. The scooter-type vehicle according to any one of claims 1 to 9, further comprising a light guide lens portion extending forward from the upper portion of the light guide.
